(19) Europäisches Patentamt / European Patent Office / Office européen des brevets

(11) **EP 2 777 925 B1**

(12) **EUROPÄISCHE PATENTSCHRIFT**

(45) Veröffentlichungstag und Bekanntmachung des Hinweises auf die Patenterteilung:
**28.04.2021 Patentblatt 2021/17**

(51) Int Cl.:
**B32B 1/08** *(2006.01)* **F16L 55/162** *(2006.01)*
**F16L 55/165** *(2006.01)*

(21) Anmeldenummer: **14158931.7**

(22) Anmeldetag: **11.03.2014**

(54) **Einlegeschlauch für die grabenlose Kanalsanierung**

Insertion hose for trenchless sewer rehabilitation

Tuyau d'insertion pour la réhabilitation des égouts sans tranchée

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.03.2013 DE 102013102394**
**21.08.2013 DE 102013109052**

(43) Veröffentlichungstag der Anmeldung:
**17.09.2014 Patentblatt 2014/38**

(73) Patentinhaber: **Buergofol GmbH**
**93354 Siegenburg (DE)**

(72) Erfinder:
• **Stark, Kurt**
**91284 Neuhaus a.d. Pegnitz (DE)**
• **Schleicher, Gregor**
**85049 Ingolstadt (DE)**
• **Boutrid, Abdel-Kader**
**93345 Siegenburg (DE)**

(74) Vertreter: **Canzler & Bergmeier Patentanwälte**
**Partnerschaft mbB**
**Friedrich-Ebert-Straße 84**
**85055 Ingolstadt (DE)**

(56) Entgegenhaltungen:
**US-A- 5 906 789**

EP 2 777 925 B1

**Beschreibung**

Die Erfindung betrifft einen Einlegeschlauch zum Einbringen in ein unterirdisches Rohr, insbesondere ein Kanalrohr, zu dessen Sanierung.

Der Anwendungsbereich von Schlauchfolien mit beispielsweise einer Olefin-Homo- oder Copolymer-Schicht, beispielsweise einer Polyethylen (PE)-Schicht, sowie einer Polyamid (PA)-Schicht ist sehr groß. Zu den Einsatzgebieten gehört neben der Verpackungsindustrie auch das Schlauchlining-Verfahren für die grabenlose Kanalrohrsanierung. Hier ist es beispielsweise beim System Glasfaser-Schlauchliner mit UV- oder Dampfhärtung bekannt, in das zu sanierende Rohr eine dickwandige Folie aus PE mit einer hohen Dichte (HDPE - High Density Polyethylene) als Gleitfolie einzubringen, welche - zumeist in der Querschnittsform eines Halbkreises - an der Innenwand des Rohres angelegt wird. Anschließend wird ein flexibler als Schlauchfolie ausgebildeter Einlegeschlauch in das Rohr eingezogen (Einzugsverfahren), wobei der Einlegeschlauch über die Gleitfolie gleitet. Hierdurch wird einerseits eine Beschädigung des Einlegeschlauchs durch die Rohrinnenwand bzw. Gegenstände im Rohr vermieden, andererseits ist die Reibung zwischen Einlegeschlauch und Gleitfolie sehr niedrig, was das Einziehen des Einlegeschlauchs erleichtert.

Ein derartiger Einlegeschlauch (Schlauchliner) weist beim System Glasfaser-Schlauchliner mit UV- oder Dampfhärtung üblicherweise einen als Schlauchfolie ausgebildeten äußeren Schlauch (Schlauchaußenfolie) und einen als Schlauchfolie ausgebildeten inneren Schlauch (Schlauchinnenfolie) auf, zwischen denen ein Trägermaterial, beispielsweise Glasfasern, eingebracht ist, welches mit reaktivem Kunststoffharz getränkt ist. Als reaktives Kunststoffharz kommen zum Beispiel handelsübliche UP-Harze (Polyester-bzw. ungesättigte Polyesterharze), VE-Harze (Vinylesterharze) oder EP-Harze (EpoxidHarze) zum Einsatz. Die Härtung der Harze erfolgt bei UP- oder VE-Harzen zum Beispiel mit Hilfe von Photoinitiatoren. Die Härtung kann aber auch thermisch erfolgen. Der Einlegeschlauch wird im Rohr durch gegen die mechanisch stabile Schlauchinnenfolie gerichtete Druckluft von innen her solange aufgeblasen, bis die Schlauchaußenfolie an der Rohrinnenwand bzw. der Gleitfolie anliegt, um anschließend das Harz - beispielsweise mittels UV-Licht aus einer langsam, durch das Innere des aufgeblasenen Einlegeschlauchs gezogenen UV-Lichtquelle - auszuhärten. Zum Schluss wird die Schlauchinnenfolie des Einlegeschlauchs abgezogen und entfernt. Hierfür ist eine gute Trennwirkung erforderlich, damit die Schlauchinnenfolie ohne Rückstände vom ausgehärteten Harz abgezogen werden kann. Die Schicht mit dem Trägermaterial ist dann den durch das Rohr zu leitenden Substanzen exponiert.

Um eine ungewollte, vorzeitige Aushärtung des Kunststoffharzes vor dem Einbringen in das zu sanierende Rohr zu verhindern (insbesondere bei der Lagerung), ist es notwendig, dass die Schlauchaußenfolie des Einlegeschlauchs eine Schutzschicht aufweist oder aus einer Schutzschicht besteht, die eine vorzeitige Einwirkung von UV-Strahlung oder kürzerwelliger Strahlung sichtbaren Lichts auf das Harz und damit eine vorzeitige Harzhärtung verhindert. Die Schlauchinnenfolie eines solchen Einlegeschlauchs muss hingegen eine sehr gute Durchlässigkeit gegenüber UV-Strahlung und kürzerwelliger Strahlung sichtbaren Lichts aufweisen. Damit wird der Aushärtungsvorgang ermöglicht, der beim im Rohr aufgeblasenen Schlauchliner durch eine Strahlungsquelle vorgenommen wird, die an der Innenseite des Schlauchliners, also innerhalb der Schlauchinnenfolie, hindurchgezogen wird.

Anstelle der oben beschriebenen Gleitfolie wird - insbesondere beim System Synthesefaser-Schlauchliner mit Warmwasser- oder Dampfhärtung - ein Preliner (auch Preliner-Folie genannt) in das zu sanierende Rohr eingebracht. Ein Preliner, der üblicherweise aus PE mit einer hohen Dichte (HDPE - High Density Polyethylene) besteht, ist eine dickwandige, das Rohr vollständig auskleidende Folie, die ebenfalls einen direkten Kontakt des Schlauchliners mit der Rohrinnenwand verhindert. Hierzu wird der Preliner direkt an der Innenwand des Rohres angelegt. Anschließend wird der Schlauchliner in das Rohr eingezogen (Einzugsverfahren) oder invertiert (Inversionsverfahren). Der Preliner verhindert zum Beispiel eine Verklebung des Kunstharzes des Schlauchliners mit der Kanalwand und einen Kontakt des noch nicht gehärteten Harzes mit Schmutz und Wasser. Ferner verhindert die Preliner-Folie auch das Austreten von Harz aus dem Kanalsanierungssystem sowie die Kontamination von Erdreich und Grundwasser. Durch die Preliner-Folie werden außerdem die Zuläufe vor eindringendem Überschuss-Harz geschützt, so dass sich keine Harzpropfen und Verstopfungen bilden können. Auch übernimmt ein Preliner beim Einzugsverfahren eine ähnliche, die Gleitreibung reduzierende Funktion wie die oben beschriebenen Gleitfolien für den einzuziehenden Schlauchliner. In diesem Fall kommt es auf niedrige Reibungskoeffizienten zwischen der Gleitfolie bzw. dem Preliner und der Außenfolie des Schlauchliners an. Hierdurch wird der Einlegeschlauch bzw. Schlauchliner beim Einziehen in das Rohr nicht durch die Rohrinnenwand bzw. Gegenstände im Rohr beschädigt, andererseits ist die Reibung zwischen Schlauchliner und Gleitfolie bzw. dem Preliner sehr niedrig und erleichtert ein Einziehen des Schlauchliners.

Entsprechend dem oben Gesagten ist es beim Einziehen, zum Beispiel beim System Glasfaser-Schlauchliner, wichtig, dass der Reibwert der Innenseite der Preliner- oder Gleitfolie gegen die Außenfolie des Schlauchliners eine sehr geringe Reibung aufweist.

Aus der US 5 906 789 A ist zur Lösung dieses Problems bekannt, die Gleitfähigkeit einer Schlauchfolie, die durch Umstülpen in einen Kanalschacht eingebracht werden soll, durch Aufbringen von Öl an der zur Kanalwand gerichteten Außenseite der Schlauchfolie zu verbessern.

Zurückkommend auf den Schlauchliner und insbesondere dessen Schlauchinnenfolie ist ein Nachteil bei der oben genannten, bisher als Schlauchinnenfolie verwendeten PE/PA- oder PE/HV/PA-Folie (HV: Haftvermittler) deren zu geringe Trennwirkung gegen die klebrigen Harze. Im schlimmsten Fall führt eine mangelhafte Trennwirkung der Schlauchinnenfolie beim Herausziehen aus dem ausgehärteten Schlauchliner dazu, dass die Schlauchinnenfolie durch zu starke Anhaftung am Harz abreißt und sich insgesamt nicht rückstandsfrei entfernen lässt. Die verbliebenen Folienbruchstücke verbleiben dann im Kanal und können diesen entweder verstopfen oder als Störstoffe wirken. Die bisher bekannten Schlauchinnenfolien sind hinsichtlich deren Trennwirkung gegenüber Harzen oder klebrigen Stoffen im Allgemeinen stark verbesserungsdürftig.

Außerdem bieten die bisher im Stand der Technik als Schlauchinnenfolien verwendeten PE/PA- oder PE/HV/PA-Folien bezüglich ihrer mechanischen Eigenschaften wie (Weiter-)Reißfestigkeit, Reißkraft, Dehnbarkeit, Spleißneigung, Schlagzähigkeit oder Durchstoßfestigkeit immer noch ein Potential der Verbesserung. Ähnlich ist es bei anderen bekannten Schlauchfolien.

Es ist Aufgabe der vorliegenden Erfindung, einen Einlegeschlauch für die grabenlose Kanalsanierung mit einer innenliegenden Schlauchfolie zur Verfügung zu stellen, welche den hohen Anforderungen hinsichtlich ihrer mechanischen Stabilität genügt und eine hervorragende Trennwirkung gegen klebrige Stoffe wie Harze aufweist.

Diese Aufgabe wird durch die Merkmale des Anspruchs 1 gelöst. Auch wird diese Aufgabe durch die Merkmale eines entsprechenden Verwendungsanspruchs gelöst.

Der erfindungsgemäße Einlegeschlauch umfasst eine flüssigkeitsdichte Ein- oder Mehrschichtfolie als innenliegenden Schlauch (Schlauchinnenfolie in Form einer Schlauchfolie) und eine flüssigkeitsdichte außenliegende Schlauchfolie (Schlauchaußenfolie), die zur Rohrwandung weist. Zwischen innen- und außenliegendem Schlauch ist ein Trägermaterial, vorzugsweise Glasfasermaterial, vorgesehen, das vorzugsweise mit einem reaktiven, durch UV-Strahlung aushärtbaren, ungesättigten Harz getränkt ist. Aus diesem getränkten Trägermaterial wird nach der Aushärtung das sanierte Kanalrohr gebildet. Nach der Aushärtung wird die erfindungsgemäße, innenliegende, vorzugsweise als Mehrschichtfolie ausgebildete Schlauchfolie bevorzugt vom mit Trägermaterial ausgekleideten Kanalrohr ab- und herausgezogen, weshalb sie sich von dem ausgehärteten Harz gut trennen lassen muss. Diesen Vorgang unterstützt die erfindungsgemäße Beschichtung und/oder Belegung auf der dem Harz-Trägersystem zugewandten Außenseite der Schlauchinnenfolie. Die Herstellung von Einlegeschläuchen im Allgemeinen ist in der WO 2007/054350 A1 oder der EP 1 155 256 B1 beschrieben.

Bei der innenliegenden Schlauchfolie des erfindungsgemäßen Einlegeschlauchs wurde überraschenderweise festgestellt, dass eine gute Trennwirkung gegen klebrige Harze auch mit einer Verringerung der Reibwerte Folie gegen Folie einhergeht. Ein solches Ergebnis war nicht zu erwarten.

Zudem weisen die innenliegenden Schlauchfolien der erfindungsgemäßen Einlegeschläuche neben einer sehr guten Trennung gegenüber Harzen hervorragende mechanische Eigenschaften auf. Ein Platzen der aufgeblasenen innenliegenden Schlauchfolie bei der grabenlosen Kanalsanierung ist praktisch ausgeschlossen. Allgemein kann die innenliegende Schlauchfolie für alle Varianten der Kanalsanierung in Frage kommen, einschließlich GFK (Glasfaserverstärkter Kunststoff) mit UV-Harzhärtung, Inversierung und thermischer Härtung.

Die Vorteile der Erfindung sind insbesondere darin zu sehen, dass die erfindungsgemäße im Einlegeschlauch innenliegende Schlauchfolie hervorragende mechanische Eigenschaften wie sehr hohe Dehnbarkeit, geringe Spleißneigung, Robustheit, Widerstandsfähigkeit sowie Durchstoßfestigkeit aufweist. Ein Platzen der Folie ist damit praktisch ausgeschlossen.

Im Speziellen stellte sich heraus, dass sich die erfindungsgemäße Schlauchinnenfolie (innenliegende Schlauchfolie) durch eine hohe mechanische Festigkeit und eine sehr gute Dehnfähigkeit (bestimmt nach der unten beschriebenen Aufblastestmethode) auszeichnet, ohne dass eine Schicht spleißt. Vorzugsweise weist die Schlauchinnenfolie im Rahmen des Schlauchlining-Verfahrens eine Dehnbarkeit bis zum "Spleiß", d.h. einem ersten Abriss einer innenliegenden Folienschicht, von mindestens 15 %, besonders bevorzugt von mindestens 20 %, ganz besonders bevorzugt von mindestens 30 %, auf. Die Dehnbarkeit bis zum Platzen beträgt vorzugsweise mindestens 80 %, bevorzugt mindestens 100 %, besonders bevorzugt mindestens 120 %, und am meisten bevorzugt mindestens 130 %, und sogar mindestens 140 %.

Eine wichtige Größe im Zusammenhang mit der Dehnfähigkeit ist der sog. "Yield-Point", d.h. die Streckgrenze. Bis zu diesem Punkt nimmt die Kraft mit der Dehnung zu. Ist der Yield-Punkt überschritten, beginnt die Folie zu fließen, die Kraft nimmt mit zunehmender Dehnung wieder ab oder bleibt zumindest konstant.

Um die oben genannten vorteilhaften Eigenschaften der erfindungsgemäßen innenliegenden Schlauchfolie im gewünschten Maße einzustellen, kann im Falle einer erfindungsgemäßen Beschichtung diese nur auf einem Teil der betreffenden Umfangsfläche der besagten Außenseite (die nach innen oder nach außen gerichtete Außenseite) vorgesehen sein. Soll beispielsweise die zur Trennung der innenliegenden Schlauchfolie von einer gegenüberliegenden Fläche nötige Kraft innerhalb eines gewünschten Kräftebereichs liegen (also nicht zu leicht und nicht zu schwer zu lösen sein), kann die Beschichtung beispielsweise als Muster vorhanden sein bzw. aufgebracht werden, z.B. in Form von kontinuierlichen und/oder unterbrochenen, beabstandet nebeneinander verlaufenden Streifen - beispielsweise und zweckmäßig in md-Richtung (machine direction), d.h. in Maschinen- und daher Schlauchlängsrichtung. Eine streifenförmige Beschichtung mit parallel in md-Richtung (d.h. Schlauchlängsrichtung) verlaufenden Streifen ist relativ einfach realisierbar und von daher vorteilhaft. Es können aber auch sich kreuzende Streifen, Punkte, Kreise oder sonstige Formen für eine bereichsweise Beschichtung gewählt werden.

Eine nur teilweise, d.h. bereichsweise, Beschichtung ist auch für den Fall vorteilhaft, wenn sie die beim zeitweisen Aufrollen der Schlauchfolie entstehenden Legekanten überdeckt, die links und rechts der Schlauchfolie in deren Längsrichtung verlaufen. Diese Legekanten entstehen sowohl jeweils an der inneren als auch der äußeren Außenseite der innenliegenden Schlauchfolie und sind potentielle Schwachstellen beim Dehnen der innenliegenden Schlauchfolie, beispielsweise beim Aufblasen. Durch die Beschichtung der Legekanten auf zumindest einer ihrer beiden Außenseiten (der inneren und/oder der äußeren) kann die Dehnung bis zum Spleiß heraufgesetzt werden. Vorteilhaft, da maschinenmäßig einfacher, wird die Beschichtung auf der jeweiligen äußeren Außenseite der beiden Legekanten aufgetragen. In anderen Umfangsbereichen der innenliegenden Schlauchfolie kann hierbei ggf. auf eine Beschichtung verzichtet werden.

Eine erfindungsgemäße Schlauchinnenfolie kann für ihren Einsatz bei der Kanalsanierung einen Schichtaufbau mit drei, vier, fünf oder mehr Schichten aufweisen. Es kann hierbei eine dreischichtige, eine vierschichtige, eine fünfschichtige oder noch höherschichtige Schlauchinnenfolie zum Einsatz kommen, wobei gemäß einer bevorzugten Alternative der Erfindung mindestens eine der Außenseiten der erfindungsgemäßen innenliegenden Schlauchfolie mit mindestens einem Polysiloxan beschichtet ist.

Gemäß einer anderen bevorzugten Alternative ist in mindestens einer der beiden äußeren Schichten mindestens ein Wachs, ein Paraffin, eine Fettsäure, ein Fett und/oder eine andere migrierende, vorzugsweise eine lipophile - in anderen Ausführungsformen jedoch alternativ eine hydrophile -, Verbindung enthalten. Auch ist eine Beschichtung mit diesen Substanzen möglich.

Im Sinne der vorliegenden Erfindung werden unter dem Begriff "Polysiloxan" Verbindungen verstanden, deren Polymerketten abwechselnd aus Silicium- und Sauerstoffatomen aufgebaut sind (Polysiloxan wird umgangssprachlich auch "Silikon" genannt). Die Siliciumatome sind durch ein, zwei, drei oder vier Sauerstoffatome mit ihrem benachbarten Siliciumatom verknüpft. Eine Mono-Einheit, M, wird bei einem Polysiloxan gebildet durch ein Siliciumatom, das mit drei Resten R und einem Sauerstoffatom verbunden ist. Dies sind stets die Endgruppen des Polysiloxans. Eine Di-Einheit, D, wird bei einem Polysiloxan gebildet durch ein Siliciumatom, das mit zwei Resten R und zwei Sauerstoffatomen verbunden ist. Dies sind meist die inneren Monomereinheiten des Polysiloxans, die ein lineares Silikon bilden. Eine Tri-Einheit, T, wird bei einem Polysiloxan gebildet durch ein Siliciumatom, das mit einem Rest R und drei Sauerstoffatomen verbunden ist. Dies sind meist innere Monomereinheiten des Polysiloxans, die zu einer Verzweigung führen. Eine Quater-Einheit, Q, wird bei einem Polysiloxan gebildet durch ein Siliciumatom, das mit vier Sauerstoffatomen verbunden ist. Dies sind meist innere Monomereinheiten des Polysiloxans, die zu einer sehr hohen Verzweigung bzw. zu einer Vernetzung des Silikons führen. Die Strukturformel eines Polysiloxans beruht daher zum Beispiel auf n wiederkehrenden Siloxan-Einheiten $(-[Si(R_2)-O]-)_n$, welche jeweils unabhängig voneinander mit zwei organischen Resten R substituiert sind und damit einen linearen Kettenaufbau des Silikons ohne Verzweigung bewirken. Die Anzahl n der wiederkehrenden Siloxan-Einheiten $[Si(R_2)-O]-)_n$ in der Polysiloxankette wird als Polymerisationsgrad des Polysiloxans bezeichnet.

Bevorzugt ist das mindestens eine Polysiloxan vernetzt bzw. ausgehärtet. Dabei erfolgt die Vernetzung meist durch besondere Reste R entlang der Polysiloxan-Kette, die eine chemische Funktion haben, wie z.B. eine Doppelbindung (z.B. Vinylgruppe, Allylgruppe, (Meth)acrylgruppe), eine Silangruppe Si-OR, ein Wasserstoffatom -H oder eine Epoxid-Gruppe. Diesbezügliche Polysiloxane können additions-, kondensations-, radikalisch, kationisch und durch Feuchtigkeitseinwirkung vernetzte Polysiloxane sein. Bei den additionsvernetzten Polysiloxanen sind diese bevorzugt metallkatalysiert additionsversetzt. Auch kann zusätzlich thermisch, elektromagnetisch (insbesondere mittels UV-Strahlung) oder durch Feuchtigkeit ausgehärtet werden. Die entsprechenden Verfahren sind dem Fachmann bekannt.

Der Einsatz von Mischungen aus mehreren Polysiloxanen für die erfindungsgemäße Beschichtung ist möglich.

Beispielsweise zum genaueren Einstellen der Trennwirkung ist gemäß vorteilhafter Ausführungsformen das Polysiloxan mit nicht Silicium-haltigen Monomeren copolymerisiert. Derartige Copolymere sind auch unter dem Begriff "Polysiloxan" im Sinne dieser Erfindung zu verstehen. Die zusätzlich eingebrachten Monomere vernetzen benachbarte Siloxan-Einheiten miteinander und füllen Zwischenräume zwischen diesen aus. Je mehr zusätzliche Monomere ohne Silicium eingebracht werden, desto geringer wird grundsätzlich die Trennwirkung. Die nicht Silicium-haltigen Monomere werden beispielsweise durch Copolymerisation mit (Meth)Acrylaten oder mit Vinylethern eingebracht.

Alternativ oder zusätzlich kann die Trennwirkung bei einer Polysiloxan-Beschichtung durch die Wahl der Länge der Polysiloxan-Ketten sowie durch den Verzweigungsgrad eingestellt werden. Durch geeignete Wahl der oben genannten Reste R, insbesondere hinsichtlich derer Länge, kann ebenfalls die Trennwirkung beeinflusst werden. Kürzere Ketten bewirken eine eher schwächere Trennwirkung, während längere Ketten eine leichtere Trennung ermöglichen. Es kann aber durchaus erwünscht sein, keine zu leichte Trennung der Polisiloxan-beschichteten Folie zu erhalten, um eine frühzeitige Ablösung zu verhindern.

Die Siloxanbeschichtung auf der dem Trägermaterial zugewandten Außenseite der innenliegenden Schlauchfolie des erfindungsgemäßen Einlegeschlauchs besitzt vorzugsweise eine Schichtdicke von höchstens 15 $\mu$m, besonders

bevorzugt von höchstens 5 μm und ganz besonders bevorzugt von 0,1 μm bis 3 μm.

Bei der Alternative der Belegung mit einer migrierenden Verbindung wird diese in diejenige äußerste Schicht der im Einlegeschlauch innenliegenden Ein- oder Mehrschichtfolie eingebracht, zu dessen Außenseite die migrierende Verbindung migrieren soll. Diese Migration an die Oberfläche der äußeren (oder einzigen) Schicht ist selbstverständlich zeitabhängig. Durch diese migrierende Bewegung entsteht die beanspruchte Belegung der entsprechenden Außenseite mit der besagten migrierenden Verbindung. Alternativ kann zusätzlich oder alternativ eine Beschichtung mit der migrierenden Verbindung auf der betreffenden Außenseite vorgenommen werden. Bei einer ausschließlichen Beschichtung mit der migrierenden Verbindung ist naturgemäß keine Zeitkomponente aufgrund einer Migration zu berücksichtigen.

Die migrierende Verbindung weist vorzugsweise ein Molekulargewicht von weniger als 10.000 g/mol, vorzugsweise von weniger als 5.000 g/mol, besonders bevorzugt von weniger als 2.000 g/mol und ganz besonders bevorzugt von weniger als 1.000 g/mol, auf.

Wie oben angedeutet, wird gemäß einer bevorzugten Ausführungsform der migrierenden Verbindung Wachs verwendet. Unter dem Begriff "Wachs" versteht man eine Vielzahl chemisch unterschiedlicher Verbindungen, die bis 20°C knetbar, fest bis brüchig hart sind, eine grobe bis feinkristalline Struktur aufweisen, farblich durchscheinend bis opak, aber nicht glasartig sind, über 40°C ohne Zersetzung schmelzen und wenig oberhalb des Schmelzpunktes leicht flüssig (gering viskos) sind. Außerdem weisen sie eine stark temperaturabhängige Konsistenz und Löslichkeit auf und sind unter leichtem Druck polierbar. Nach Definition der Deutschen Gesellschaft für Fettwissenschaft (DGF) ist ein Stoff nach der DGF-Einheitsmethode M-I 1 (75) kein Wachs, wenn er mehr als eine der vorstehend aufgeführten Eigenschaften nicht erfüllt. Besonders bevorzugte Wachse sind ausgewählt aus der Gruppe umfassend Fettsäuren, Fettalkohole, langkettige Amine, Fettsäureester, Fettsäureamide und Tenside.

Als lipophile Verbindung kann gemäß einigen bevorzugten Ausführungsformen für eine migrierende Verbindung eine Verbindung ausgewählt werden aus der Gruppe, die umfasst:

- Fettsäuren, vorzugsweise C7-30-Alkyl- und C7-30-Alkenyl-Fettsäuren;
- Fettalkohole, vorzugsweise C7-30-Alkyl- und C7-30-Alkenyl-Fettalkohole;
- langkettige Amine, vorzugsweise C7-30-Alkyl- und C7-30-Alkenyl-Amine;
- Fettsäureester, Fettsäureamide und Tenside, vorzugsweise kationische, anionische, nichtionische und amphotere Tenside, mit einem Erweichungs- bzw. Schmelzpunkt bei Normaldruck von mindestens 30°C, vorzugsweise mindestens 50°C, besonders bevorzugt mindestens 80°C, ganz besonders bevorzugt mindestens 100°C, insbesondere bei mindestens 120°C.

Als hydrophile Verbindungen kommen insbesondere Polyether, Polyester oder Alkohole mit mindestens einer Hydroxyl-Gruppe in Frage. Vorteilhafterweise kann eine Verbindung ausgewählt werden aus der Gruppe, die umfasst Ethylenglykol, Polyethylenglykol, Polypropylenglykol, Propandiol, Butandiol, Pentandiol, Hexandiol und Glycerin.

Die mindestens eine migrierende, lipophile oder hydrophile, Verbindung kann gemäß einer vorteilhaften Ausführungsform einer ein thermoplastisches Olefin-Homo- oder Copolymer enthaltenden Außenschicht oder gemäß einer anderen vorteilhaften Ausführungsform einer ein Homo- und/oder Copolyamid enthaltenden Außenschicht zugesetzt sein.

Der Anteil der mindestens einen migrierenden, lipophilen oder hydrophilen Verbindung in der betreffenden Schicht liegt vorteilhafterweise bei mindestens 0,1 Gew.-%, vorzugsweise bei mindestens 0,5 Gew.-% und besonders bevorzugt bei mindestens 1 Gew.-%.

Die mindestens eine migrierende Verbindung kann gemäß einer vorteilhaften Variante eine kurzkettige Verbindung bzw. ein Oligomer mit 1 bis 50 Kohlenstoffatomen und gemäß einer anderen vorteilhaften Variante ein kürzerkettiges Polymer mit 50 bis 20.000 Kohlenstoffatomen sein. Die Erfindung hinsichtlich der migrierenden Verbindung ist aber nicht nur auf organische Verbindungen beschränkt. Als migrierende Verbindungen eignen sich ferner auch anorganische Verbindungen wie kurzkettige Polysiloxane (mit 1 bis 500 Silicium-Atomen) oder (Schicht)Silikate, wie zum Beispiel Talkum.

Gemäß einer vorteilhaften Ausführungsform der Erfindung weist die innenliegende Schlauchfolie mindestens eine Schicht auf, die mindestens ein thermoplastisches Elastomer (TPE), vorzugsweise zu mehr als 20 Gew.-%, vorzugsweise mehr als 40 Gew.-% und bis zu 100 Gew.-%, enthält. Das TPE kann gemäß einer bevorzugten Ausführungsform thermoplastisches Polyurethan (TPU), also ein thermoplastisches Elastomer auf Urethanbasis (auch als TPE-U bezeichnet) sein. Beispiele hierfür sind Desmopan, Texin und Utechllan von Bayer. Weitere Beispiele sind die Produkte, die unter den Handelsnamen Elastollan, Estane, Morthane, Pellethane, Pearlthane, Skythane oder Tecoflex erhältlich sind. Mit Vorteil können auch andere TPE-Substanzen eingesetzt werden, wobei - neben TPU bzw. TPE-U - folgende Gruppen unterschieden werden: TPE-O oder TPO = Thermoplastische Elastomere auf Olefinbasis, vorwiegend PP/EPDM, z. B. Santoprene von AES/Monsanto; TPE-V oder TPV = Vernetzte thermoplastische Elastomere auf Olefinbasis, vorwiegend PP/EPDM, z. B. Sarlink von Teknor Apex, Forprene von SoFter; TPE-E oder TPC = Thermoplastische Polyesterelastomere / Thermoplastische Copolyester, z. B. Hytrel von DuPont oder Riteflex von Ticona; TPE-S oder TPS = Styrol-Blockcopolymere (SBS, SEBS, SEPS, SEEPS und MBS), z. B. Styroflex von BASF, Septon von Kuraray oder Thermolast von Kraiburg TPE; und TPE-A oder TPA = Thermoplastische Copolyamide, z. B. PEBAX von Arkema. Auch ist TPE-Silikon verwendbar, das beispielsweise von Wacker unter dem Handelsnamen Geniomer erhältlich ist. Geniomer® ist ein Copolymer aus Polydimethylsiloxan und Harnstoff und verbindet die guten Verarbeitungseigenschaften eines organischen Thermoplasts mit einigen typischen Siliconeigenschaften. Geniomer® weist somit ein Eigenschaftsprofil auf, das in dieser Form bislang weder bei Thermoplasten noch bei Siliconen realisierbar war.

Die Verwendung von TPE verschafft der innenliegenden Schlauchfolie des erfindungsgemäßen Einlegeschlauchs noch weiter verbesserte mechanische Eigenschaften wie Robustheit, Widerstandsfähigkeit, Durchstoßfestigkeit bei relativ geringer Eigensteifigkeit. Dies ist insbesondere dann der Fall, wenn die erfindungsgemäße Schlauchfolie in einer Außenschicht ein Homo- oder Copolyamid mit einem prozentualen Gewichtsanteil von mehr als 25 Gew.-%, vorzugsweise zu mehr als 50 Gew.-%, besonders bevorzugt mehr als 75 Gew.-% oder sogar zu mehr als 95 Gew.-% bis hin zu 100 Gew.-% enthält.

Die Filmdicke der Beschichtung und/oder Belegung der erfindungsgemäßen innenliegenden Schlauchfolie beträgt vorteilhafterweise höchstens 15 $\mu$m, vorzugsweise höchstens 5 $\mu$m, und besonders bevorzugt zwischen 5 nm und 3 $\mu$m im Falle einer Belegung und zwischen 0,1 bis 3 $\mu$m im Falle einer Beschichtung.

Die Gesamtdicke der erfindungsgemäßen innenliegenden Schlauchfolie kann zwischen 10 $\mu$m und 5000 $\mu$m, vorzugsweise zwischen 20 $\mu$m und 1000 $\mu$m, besonders bevorzugt zwischen 30 $\mu$m und 500 $\mu$m betragen.

Eine bevorzugte Ausführungsform der erfindungsgemäßen innenliegenden Schlauchfolie weist eine Schichtfolge aus mindestens zwei Schichten auf, wobei eine nach innen weisende Außenschicht und eine nach außen weisende Außenschicht vorgesehen ist. Es ist zudem vorteilhafterweise, aber nicht notwendigerweise, mindestens eine innenliegende Schicht als Haftvermittlerschicht vorhanden.

Ein entsprechendes Beispiel bei einer mehrschichtigen Ausgestaltung der erfindungsgemäßen innenliegenden Schlauchfolie sieht eine Außenschicht mit mindestens einem Homo- und/oder Copolyamid und die andere Außenschichten mit mindestens einem thermoplastischen Olefin-Homo- oder Copolymer vor, wobei mindestens eine der beiden Außenschichten außenseitig die besagte Beschichtung und/oder Belegung aufweist. Innenliegende Haftvermittlerschichten können vorgesehen sein, so dass sich beispielsweise eine Schichtfolge von PA/HV/PE ergibt.

Ein weiteres Beispiel ist eine innenliegende Schlauchfolie, bei der beide Außenschichten mindestens ein thermoplastisches Olefin-Homo- oder Copolymer enthalten, wobei eine ein Homo- und/oder Copolyamid enthaltende innenliegende Schicht vorhanden ist, und wobei eine der beiden Außenschichten außenseitig die besagte Beschichtung und/oder Belegung aufweist. Innenliegende Haftvermittlerschichten können vorgesehen sein, so dass sich beispielsweise eine Schichtfolge von PE/HV/PA/HV/PE ergibt.

Eine erfindungsgemäße innenliegende Schlauchfolie mit drei Schichten kann dementsprechend beispielsweise eine Schichtfolge PE/HV/PA aufweisen, eine fünfschichtige Folie beispielsweise eine Schichtfolge PE/HV/PA/HV/PE, PA/HV/PE/HV/PE oder PA/HV/PE/PE/PE oder PA/HV/PA/HV/PE, eine siebenschichtige Folie beispielsweise eine Schichtfolg PE/PE/HV/PA/HV/PE/PE, PA/HV/PE/PE/PE/PE/PE oder PA/HV/PA/HV/PE/PE/PE oder PA/HV/PA/HV/PA/HV/PE.

Der oder die PA-Schichten können aus gleichem oder verschiedenem PA-Material bestehen. Auch PA-Mischungen sind bevorzugt. Weitere Details sind weiter unten ausgeführt. Sind zwei PA-Schichten vorhanden, kann ein Haftvermittler eingebracht werden. Es kann aber auch ohne Haftvermittler gearbeitet werden. Bevorzugt ist der Einsatz von (üblichen) Haftvermittlern.

Zur Herstellung der Schicht der erfindungsgemäßen innenliegenden Schlauchfolie eignet sich mindestens ein Homo- und/oder Copolyamid. Geeignete Homo- oder Copolyamide sind vorzugsweise ausgewählt aus der Gruppe thermoplastische aliphatische, teilaromatische oder aromatische Homo- oder Copolyamide. Diese Homo- oder Copolyamide können aus Diaminen (z.B. aliphatische Diamine mit 2-10 Kohlenstoffatomen, insbesondere Hexamethylendiamin, und/oder aromatische Diamine mit 6-10 Kohlenstoffatomen, insbesondere p-Phenylendiamin) und/oder aus aliphatischen Dicarbonsäuren und/oder aromatischen Dicarbonsäuren mit 6-14 Kohlenstoffatomen (z.B. Adipinsäure, Terephthalsäure oder Isoterephthalsäure) und/oder aus Lactamen mit 4-10 Kohlenstoffatomen (z.B. aus $\varepsilon$-Caprolactam) hergestellt werden.

Vorzugsweise werden PA 6; PA 11; PA 12; PA 66; PA 6,10; PA 6,12; PA 666; PA 6I; PA 6T oder entsprechende Co-Polymere oder Mischungen aus mindestens zwei der genannten Polyamide verwendet.

Die Schichtdicke von mindestens ein Homo- oder Copolyamid enthaltenden Schichten der erfindungsgemäßen innenliegenden Schlauchfolie beträgt vorzugsweise zwischen 5 $\mu$m und 100 $\mu$m, besonders bevorzugt zwischen 20 $\mu$m und 90 $\mu$m.

Zur Herstellung von einer oder mehreren Schichten der erfindungsgemäßen innenliegenden Schlauchfolie, die mindestens ein thermoplastisches Olefin-Homo- oder Copolymer enthalten, sind solche von $\alpha$,ß-ungesättigten Olefinen mit 2-10 Kohlenstoffatomen bevorzugt. Es eignen sich hierbei vorzugsweise Ethylen-Homopolymere (Polyethylene, PE), vorzugsweise LDPE (Polyethylen hoher Dichte im Bereich von 0,86-0,93 g/cm$^3$), LLDPE (Linear Low Density Polyethylene), HDPE (Polyethylen hoher Dichte im Bereich von 0,94 und 0,97 g/cm$^3$) und mPE (auf Basis von Metallocen-Katalysatoren polymerisierte PE), Propylen-Homopolymere (Polypropylene, PP), Butylen-Homopolymere (Polybutylene, PB) und Isobutylen-Homopolymere (Polyisobutylene, PI) oder Mischungen aus mindestens zwei der genannten Polymere.

Wenn in einer bzw. mehreren Schichten der erfindungsgemäßen innenliegenden Schlauchfolie mindestens ein thermoplastisches Olefin-Homo- oder Copolymer enthalten ist, beläuft sich deren Schichtdicke bzw. belaufen sich deren addierten Schichtdicken vorzugsweise auf mindestens 15 % der Gesamtschichtdicke der Schlauchfolie, vorzugsweise auf mindestens 25 % und besonders bevorzugt zwischen 30 % und 60 %.

Zur Herstellung von Haftvermittlerschichten der erfindungsgemäßen, als Mehrschichtfolie ausgebildeten innenliegenden Schlauchfolie können übliche Haftvermittler eingesetzt werden. Wenn ein modifiziertes thermoplastisches Polymer für den oder die Haftvermittlerschichten eingesetzt wird, können insbesondere die zuvor genannten Olefin-Homo- oder Copolymere verwendet werden, allerdings mit geeigneter Modifizierung.

Vorzugsweise wird demnach mindestens ein modifiziertes Olefin-Homo- oder Copolymer verwendet, wobei die Modifizierung vorzugsweise mit mindestens einer organischen Säure oder mindestens einem vorzugsweise zyklischen organischen Säureanhydrid, vorzugsweise mit Maleinsäureanhydrid, erfolgt. Die Schichtdicke der Haftvermittlerschicht(en) der erfindungsgemäßen innenliegenden Mehrschichtfolie liegt vorzugsweise zwischen 1 $\mu$m bis 30 $\mu$m, besonders bevorzugt zwischen 2 $\mu$m bis 20 $\mu$m.

Bevorzugt sind in den besagten Schichten, in denen mindestens ein Homo- oder Copolyamid oder mindestens ein thermoplastisches Olefin-Homo- oder Copolymer enthalten ist, diese Verbindungen mit einem prozentualen Gewichtsanteil von mehr als 25 Gew.-% enthalten.

Wie schon oben erwähnt, wurde überraschend herausgefunden, dass sich die erfindungsgemäße innenliegende Schlauchfolie durch sehr gute mechanische Eigenschaften auszeichnet. So führt beispielsweise die Silikonisierung (Beschichtung mit Polysiloxan) der innenliegenden Schlauchfolie überraschenderweise zu einer deutlichen Verbesserung der mechanischen Werte in Bezug auf Spleißbildung und Bruchdehnung.

Bei der Sanierung von unterirdischen Rohren kann die erfindungsgemäße Schlauchfolie somit als Schlauchinnenfolie den auftretenden Belastungen, insbesondere beim Aufblasen im Rohrsystem, hervorragend standhalten. Das gilt auch bei den mechanischen Belastungen, denen die Folie beim Transport ausgesetzt ist. Des Weiteren wurde festgestellt, dass die als Schlauchinnenfolie eingesetzte Schlauchfolie hinreichend reißfest ist, wenn sie nach Aushärtung des Harzes vom Harz/Trägersystem abgezogen wird, was durch die erfindungsgemäße hervorragende Trennwirkung erheblich unterstützt wird. So kann die Schlauchinnenfolie rückstandslos abgezogen werden und es bleiben keine Folienbruchstücke im sanierten Kanal. Zudem weist die erfindungsgemäße Schlauchinnenfolie eine gute Barrierewirkung gegen das Austrocknen des besagten Harzes auf.

Einer erfindungsgemäßen einschichtigen innenliegenden Schlauchfolie oder mindestens einer der beiden Außenschichten einer erfindungsgemäßen mehrschichtigen innenliegenden Schlauchfolie können - unter Erhalt der trennenden Wirkung - verschiedenste Zusatzstoffe zugesetzt werden, beispielsweise Antioxidantien, Antiblockmittel, Antifogmittel, Antistatika, antimikrobielle Wirkstoffe, Oxygen Scavenger, Lichtschutzmittel, UV-Absorber, UV-Filter, Farbstoffe, Farbpigmente, Stabilisierungsmittel, vorzugsweise HitzeStabilisatoren, Prozess-Stabilisatoren und UV- und/oder Licht-Stabilisatoren, vorzugsweise basierend auf wenigstens einem sterisch gehinderten Amin (HALS), Prozesshilfsmittel, Flammschutzmittel, Nukleierungsmittel, Kristallisationsmittel, vorzugsweise Kristallkeimbildner, Gleitmittel, optische Aufheller, Flexibilisierungsmittel, Siegelmittel, Weichmacher, Silane, Abstandshalter, Füllstoffe, Peel-Additive, Benetzungsmittel, oberflächenaktive Verbindungen, vorzugsweise Tenside, und Dispergiermittel. Der Anteil an Zusatzstoffen in den Schichten kann mindestens 0,01-20 Gew.-%, vorzugsweise mindestens 0,1-10 Gew.-% (jeweils bezogen auf das Gesamtgewicht einer einzelnen Schicht) betragen.

In einer bevorzugten Ausführungsform ist die erfindungsgemäße innenliegende Schlauchfolie nicht nur zumindest teilweise durchlässig für UV-Strahlung, sondern zudem - aus dem gleichen Grund wie oben - zumindest teilweise durchlässig für kurzwelliges, sichtbares Licht (d.h. elektromagnetische Strahlung in einem Wellenlängenbereich von 400 bis 500 nm, vorzugsweise von 400 bis 450 nm), vorzugsweise zu mindestens 80 %, besonders bevorzugt zu mindestens 90 %. Hierdurch eignet sich die erfindungsgemäße Schlauchinnenfolie des Schlauchliners bzw. des Einlegeschlauchs bei der Rohrsanierung, da in diesem Fall das die Schlauchinnenfolie durchdringende UV-Licht einer UV-Quelle das Harz aushärten kann.

Die erfindungsgemäße innenliegende Schlauchfolie wird daher als gut trennende Schlauchinnenfolie, bei der grabenlosen Kanalsanierung verwendet.

Im Rahmen der vorliegenden Erfindung wird unter einem Kalibrierschlauch, der nicht Teil der vorliegenden Erfindung ist, ein Schlauch verstanden, der von seiner Funktion her im Wesentlichen der Schlauchinnenfolie beim System UV-/Licht-härtenden Glasfaserliner entspricht. Nach oder gleichzeitig mit dem Einbau eines mit thermisch reaktivem Kunstharz getränkten Synthesefilzliners in den zu sanierenden Kanal, wird dieser mit Hilfe eines Kalibrierschlauchs formschlüssig im Kanal aufgestellt. Der Kalibrierschlauch kann somit eine "blanke" Folie in Form einer Schlauchfolie sein. Alternativ ist der Kalibrierschlauch eine Kombination eines Synthesefaserfilzes mit entweder einer Beschichtung (meist TPU) oder einer Folie. Letzteres entspricht dann einem "Rohr-im-Rohr"-System. Die Abfolge bei Verwendung eines Kalibrierschlauchs ist dann zum Beispiel wie folgt: Außen die Kanalwand, dann bei Bedarf eine Preliner-Folie, dann eine außenliegende Folie des Schlauchliners oder Beschichtung, dann Träger mit Synthesefasern und Harztränkung (bilden das äußere Rohr), dann Synthesefasern mit ggf. Harz plus Beschichtung oder Folie (bilden den Kalibrierschlauch als inneres Rohr). Die genannten, an die Synthesefasern anliegenden Folien können erfindungsgemäße Schlauchfolien sein. Durch Füllung des Kalibrierschlauchs von innen mit Wasser, Druckluft etc. wird der den Träger aufweisende Synthesefilzliner im zu sanierenden Rohr aufgestellt. Die Aushärtung des Harzes erfolgt auch in diesem Fall von innen, zum Beispiel durch heißes Wasser oder durch Wasserdampf.

Vorzugsweise weist die erfindungsgemäße Schlauchinnenfolie eine Sauerstoffbarriereschicht, vorzugsweise eine EVOH-Schicht, eine Wasserdampfbarriereschicht und/oder eine Ölbarriereschicht auf.

Die außenliegende Schlauchfolie des erfindungsgemäßen Einlegeschlauchs kann ein- oder mehrschichtig sein. Vorzugsweise absorbiert und/oder reflektiert sie UV-Strahlung und/oder kurzwelliges, sichtbares Licht. Die außenliegende Schlauchfolie kann dabei entweder blickdicht oder zumindest kontakttransparent sein. Weiterhin ist die außenliegende Schlauchfolie eine zumindest kontakttransparente UV-Strahlung und/oder kurzwelliges, sichtbares Licht absorbierende und/oder reflektierende Schlauchfolie. Ein solcher außenliegender Schlauch ist in der WO 2010/075946 A1 sowie der DE 10 2010 023 764 A1 beschrieben, wobei dieser außenliegende Schlauch vorzugsweise die dort beschriebenen Inhaltsstoffe und Eigenschaften aufweist.

Als Trägermaterial zwischen außen- und innenliegender Schlauchfolie werden bevorzugt Glasfasergewebe, Synthesefaserfilze (wie z.B. Nadelfilze), Vliese und/oder Nonwoven-Textilfabrikate oder Textilien (wie z.B. Strickschläuche) verwendet, die jeweils mit mindestens einem reaktiven Kunststoffharz, vorzugsweise jeweils mit mindestens einem ungesättigten Polyesterharz (UP-Harz) und $\alpha,\beta$-ungesättigten Monomeren, wie z. B. Styrol, getränkt sind. Ein entsprechendes Beispiel sind glasfaserverstärkte Kunststoffe (GFK). Als weitere Harze kommen neben den UP-Harzen auch EP- und VE-Harze in Frage.

Die Erfindung betrifft ebenfalls ein Verfahren zur Herstellung der im erfindungsgemäßen Einlegeschlauch innenliegenden Schlauchfolie. Bevorzugt wird die erfindungsgemäße Schlauchfolie durch Extrusion, vorzugsweise Blasfolien-Extrusion, zu einer Schlauchfolie oder durch Co-Extrusion, vorzugsweise Blasfolien-Co-Extrusion, zu einer Schlauchfolie hergestellt. Diese Herstellungsverfahren und entsprechende Parameter sind dem Fachmann allgemein bekannt. Mindestens eine der beiden beschichteten Außenseiten der erfindungsgemäßen, in Schlauchform vorliegenden Folie wird im Rahmen einer Alternative des erfindungsgemäßen Verfahrens mit einem Polysiloxan beschichtet, wobei bevorzugt eine Mischung aus wenigstens einem nicht ausgehärteten Polysiloxan und wenigstens einem vernetzenden Additiv (sowie eventuell Zusatzstoffen) zum Einsatz kommt. Durch Einwirkung von Wärme und/oder elektromagnetischer Strahlung und/oder Feuchtigkeit, ggf. durch Zusatz wenigstens eines UV- oder Photo-Initiators und/oder eines Radikalstarters in die Mischung, wird die Beschichtung dann auf der besagten mindestens einen Außenseite ausgehärtet. Diese Techniken sind dem Fachmann bekannt.

Bei der Beschichtung der im erfindungsgemäßen Einlegeschlauch innenliegenden Schlauchfolie mit Polysiloxan kann folgendermaßen vorgegangen werden: Zunächst wird die (co-)extrudierte Schlauchfolie aufgerollt und zur Beschichtungsanlage gefördert. Gemäß dem üblicherweise angewendeten Verfahren wird nun die Schlauchfolie flach ausgebreitet, ggf. entlüftet und auf einer ihrer Seiten, beispielsweise ihrer Oberseite, mit einem noch nicht ausgehärteten Polysiloxan beschichtet. Nach dessen Aushärtung wird die andere Oberfläche mit noch nicht ausgehärtetem Polysiloxan beschichtet, woran sich wiederum eine Aushärtung dieser neuen Schichte anschließt. Im Anschluss an das beidseitige Beschichten und Austrocknen wird die Schlauchfolie wieder aufgewickelt.

Alternativ ist die Beschichtung der beiden flachen Seiten der Schlauchfolie auch in einem einzigen Schritt möglich.

Ein alternatives, erfindungsgemäßes Verfahren zeichnet sich dadurch aus, dass der flachgelegte, noch unbeschichtete Schlauch vor oder in der Beschichtungsanlage in Umfangsrichtung der Schlauchfolie gedreht wird, so dass sich die vormaligen, durch das erstmalige Aufrollen (unmittelbar nach der Herstellung) sich ergebenden Kanten der Schlauchfolie nicht mehr randseitig befinden. Mit anderen Worten wird die Schlauchfolie um einen Winkel gedreht, vorzugsweise um 90°C, so dass die eine ursprünglichen Kante nunmehr auf der Ober- bzw. Vorderseite und die andere ursprüngliche Kante nunmehr auf der Unter- bzw. Rückseite der flachgelegten Schlauchfolie angeordnet sind. Auf diese Weise können die ursprünglichen, durch die Erstaufwicklung entstandenen Kantenbereiche vollständig beschichtet werden.

Durch dieses Verfahren ergibt sich der Vorteil, dass die durch die erste Aufwicklung entstandenen Kanten, die einen sehr engen Biegeradius aufweisen und somit bei hohen Belastungen im aufgeweiteten, runden Zustand Risse in der Schlauchfolie nach sich ziehen können, beschichtet werden. Durch die Beschichtung werden, wie sich bei der erfindungsgemäßen Schlauchfolie herausgestellt hat, die mechanischen Eigenschaften verbessert, so dass diese Schwachstellen an den ursprünglichen Kanten durch die Beschichtung eliminiert bzw. abgemildert und damit "geheilt" werden. Zwar entstehen durch die Drehung der Schlauchfolie um die eigene Längsachse, d.h. in Umfangsrichtung, neue Kanten; diese werden aber beim Drehen, Einführen in die Beschichtungsanlage und beim Beschichten der Schlauchfolie selbst wesentlich weniger geknickt und belastet als die ursprünglichen Kanten. Daher ist es im Wesentlichen unschädlich, dass diese neuen Kantenbereiche nicht oder weniger beschichtet werden als die beiden Flachseiten der flachgelegten Schlauchfolie.

Zudem ist eine erneute Beschichtung von nicht beschichteten Bereichen in der Beschichtungsanlage möglich.

Eine Prägung, Reckung, Konditionierung (reversible Aufnahme von Feuchtigkeit, vorzugsweise von Wasser, durch ein thermoplastisches Kunststoffmaterial wie Homo- oder Copolyamid oder der gesamten Schlauchfolie) und/oder Bedruckung der im erfindungsgemäßen Einlegeschlauch innenliegenden Schlauchfolie kann vorteilhaft sein. Hingegen ist die erfindungsgemäße Schlauchfolie vorzugsweise nicht orientiert. Bevorzugt ist die Schlauchinnenfolie transparent.

In den Figuren sind schematisch verschiedene Ausführungsbeispiele der Erfindung dargestellt. Es zeigen:

**Fig. 1**     einen Schlauchliner im Querschnitt;

**Fig. 2**     einen Querschnitt durch die Schlauchinnenfolie des Schlauchliners gemäß der Fig. 1;

**Fig. 3**     eine Seitenansicht einer Schlauchinnenfolie mit in Streifen aufgetragener Beschichtung;

**Fig. 4**     ein zu sanierendes Kanalrohr mit einem Preliner (Gleitschlauch), im Querschnitt, und

**Fig. 5**     ein zu sanierendes Kanalrohr mit einem Preliner und dem Schlauchliner gemäß der Fig. 1, im Querschnitt.

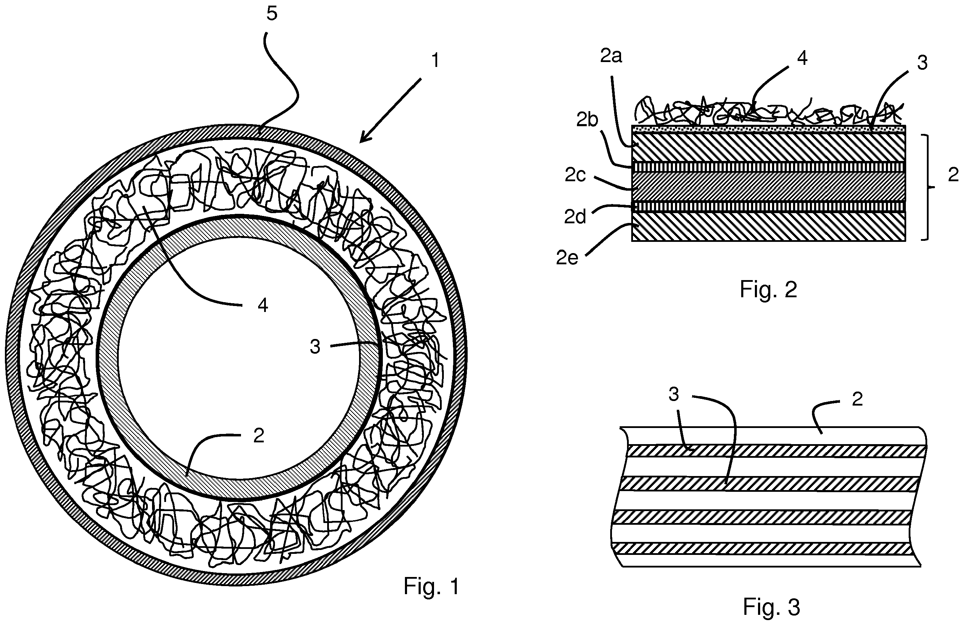

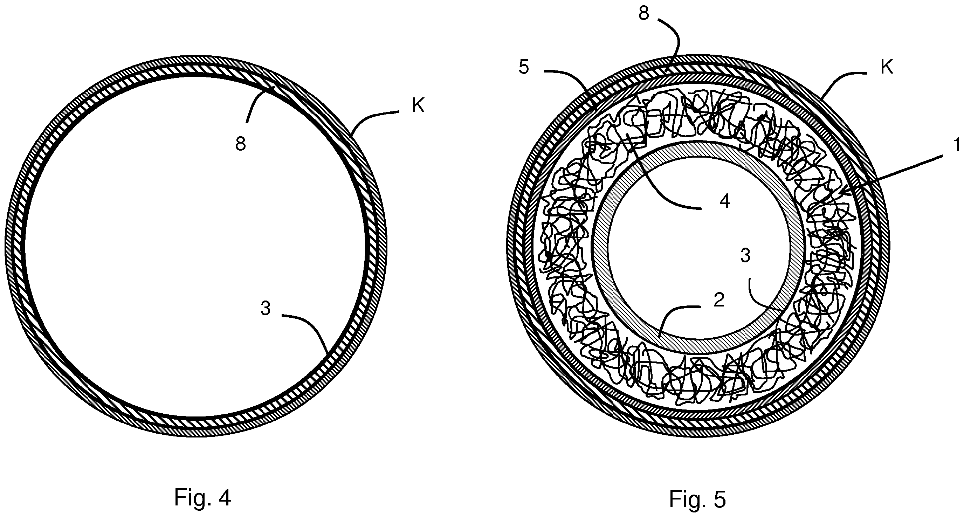

In der Fig. 1 ist ein Schlauchliner 1 im aufgeblasenen Zustand dargestellt, um ein zu sanierendes Kanalrohr K (s. Fig. 5) auszukleiden. Der Schlauchliner 1 weist eine Schlauchinnenfolie (auch innenliegende Schlauchfolie genannt) 2, ein Harz-Trägersystem 4 sowie eine Schlauchaußenfolie 5 auf. Dieser Aufbau eines Schlauchliners ist schon des längeren bekannt, beispielsweise aus der DE 10 2010 023 764 A1. Der Schichtaufbau und die Bestandteile der Schichten sind weiter oben zudem genauer beschrieben.

Die besagte Schlauchinnenfolie 2 weist vorliegend einen Schichtaufbau PE/HV/PA/HV/PE auf. Die entsprechende Schichtfolge ist in Fig. 2 dargestellt mit den Bezugszeichen 2a/2b/2c/2d/2e. Alternative fünfschichtige Aufbauten oder auch drei- oder siebenschichtige sind oben aufgeführt. Erfindungsgemäß weist die Schlauchinnenfolie 2 auf ihrer zum Harzträgersystem 4 weisenden Außenseite eine - vorliegend - vollflächige Beschichtung 3 mit mindestens einem Polysiloxan auf, s. Fig. 1 und 2. Unter dem Begriff "Polysiloxan" werden auch Mischungen von einem oder mehreren Polysiloxanen mit Zusatzstoffen und/oder Polysiloxane verstanden, welche mit nicht Silicium-haltigen Monomeren copolymerisiert sind. Es wird hierbei auf die obigen entsprechenden Ausführungen verwiesen. Durch die erfindungsgemäße Beschichtung wird einerseits das Ablösen der Schlauchinnenfolie 2 von dem Harz-Trägersystem 4 nach UV-Aushärtung des Harzes im Kanalrohr erleichtert. Andererseits hat sich gezeigt, dass die Schlauchinnenfolie 2 widerstandsfester ist, was beim Aufblasen des Schlauchliners im Kanalrohr von Wichtigkeit ist. Die höhere Reißkraft, Durchstoßfestigkeit und Dehnbarkeit sowie die geringere Spleißneigung führen zu weniger Schäden an der Schlauchinnenfolie als bei bekannten Schlauchinnenfolien.

Ähnlich verhält es sich, wenn zusätzlich oder anstelle der oben genannten Polysiloxan-Beschichtung eine Belegung oder Beschichtung mit migrierenden Verbindungen vorgesehen ist.

In der Fig. 3 ist eine Schlauchinnenfolie 2 von der Seite des Harz-Trägersystems 4 (nicht dargestellt) wiedergegeben. Die Beschichtung 3 ist hier in Streifen aufgetragen, um ein vorzeitiges Ablösen der Schlauchinnenfolie 2 vom Harz-Trägersystem 4 zu verhindern. Dies könnte passieren, wenn die entsprechenden Trennkräfte zu niedrig wären. Mit anderen Worten kann über nur ein bereichsweises Auftragen der Beschichtung (bzw. analog der Belegung) die Trennkraft optimiert werden - auch wenn dies zu Lasten der mechanischen Widerstandsfähigkeit geht.

In der Fig. 4 ist ein Kanalrohr K mit einem Preliner (auch Gleitschlauch genannt) im Querschnitt dargestellt, der nicht Teil der Erfindung ist. Der Preliner 8 kann beispielsweise aus einer HDPE-Monofolie oder einer Mehrschichtfolie bestehen. Auf der zum Kanalrohrinneren gewandten Seite des Preliners 8 ist eine Beschichtung 3 (oder eine Belegung), entweder kontinuierlich oder unterbrochen (beispielsweise streifenförmig), vorgesehen. Hierdurch wird die Gleitreibung beim Einziehen eines Schlauchliners 1 reduziert.

Die Fig. 5 zeigt die Einbausituation eines Schlauchliners 1 in einem Kanalrohr K, das mit einem Preliner 8 ausgekleidet ist. Die Schlauchinnenfolie 1 (Fig. 1 und 2) und/oder der Preliner 8 (Fig. 4) können die vorgenannten Beschichtungen 3 aufweisen. Dargestellt ist eine Beschichtung 3 auf der dem Harz-Trägersystem 4 zugewandten Außenseite der Schlauchinnenfolie 2.

Die in den Figuren dargestellten Ausführungsbeispiele beziehen sich auf Beschichtungen mit mindestens einem Polysiloxan. Entsprechende Aussagen mit den prinzipiell entsprechenden Figuren gelten für den Fall der Beschichtung und/oder Belegung mit mindestens einer migrierenden Verbindung.

## I. Testmethoden

### 1. Bestimmung der Trennkraft (Trennwirkung)

Zur Bestimmung der Trennwirkung der in einem erfindungsgemäßen Einlegeschlauch innenliegenden Schlauchfolie gegen einen Klebstoff, der auf einem Klebestreifen aufgebracht ist, wird deren Trennkraft bestimmt, die in der Einheit [cN/cm] oder [cN/25 mm] angegeben wird. Die Trennkraft ist diejenige Kraft, die zum Entfernen, also Trennen, der Trennfolie vom Klebstoff erforderlich ist. Die Trennkraft gegenüber einem Klebstoff ist hierbei mit der Trennkraft gegenüber einem klebrigen Harz vergleichbar.

Zur experimentellen Bestimmung wird ein Testklebeband (Breite 25 mm) über die gesamte Breite einer Probe der erfindungsgemäßen Schlauchfolie (oder einer Vergleichsfolie) aufgeklebt. Die Probe wird so zugeschnitten, dass längsseitig vom Testklebeband jeweils ein unbeklebter Rand der Trennfolie von 1 cm übersteht. Die gesamte Probenbreite beträgt 4,5 cm (1 cm + 2,5 cm + 1 cm). Die Probe wird dann in mehrere jeweils ca. 30 cm lange Streifen geschnitten und die Proben-Streifen 15 Minuten bei Raumtemperatur gelagert. Anschließend wird die nicht das Testklebeband aufweisende Seite des Probenstreifens mittels eines Doppelklebebands in eine Metallschiene (350 x 40 mm) eines elektronisch gesteuerten Zerreißgeräts eingebracht, die mit einer unteren Spannklemme fixiert wird. Ein steifer, ca. 400 mm langer Folienstreifen wird am Testklebeband des Probenstreifens befestigt und mittels einer oberen Spannklemme im Zerreißgerät fixiert. Das Testklebeband wird nun unter einem Winkel von 180° mit einer Abzugsgeschwindigkeit von 1800 mm/min abgezogen und zur Ermittlung der Trennkraft ein Kraftdiagramm aufgezeichnet. Es wird jeweils ein Mittelwert aus 3 Messungen ermittelt.

### 2. Bestimmung der Haftung der Beschichtung auf der Außenschicht

Die Haftung der Beschichtung auf der Außenschicht einer erfindungsgemäßen Schlauchfolie wird wie folgt geprüft: Eine Probe einer solchen Schlauchfolie wird so auf eine glatte Unterlage gelegt, dass die Beschichtung nach oben zeigt. Mit einem Finger wird vier- bis fünfmal über die Oberfläche der Beschichtung gerubbelt.

Die Haftung der Beschichtung auf der Außenschicht wird wie folgt beurteilt:

- Prüfung i.O. (Prüfung in Ordnung) = kein partielles (oder vollständiges) Ablösen der Beschichtung.
- Rub-Off = partielles (oder vollständiges) Ablösen der Beschichtung.

### 3. Prüfverfahren und -geräte für Reibung, Aufblastest, Spleißen und Bruch

Zur Bestimmung der Dehnbarkeit der Vergleichsbeispielfolie V1 sowie der verschiedenen erfindungsgemäßen Mehrschichtfolien in Form von Schlauchfolien, d.h. Beispiele B1-B6, wurden Aufblastests durchgeführt.

Zur Vorbereitung wurde eine 5 m lange Schlauchfolie, die einen Schlauchumfang von 1175 mm bis 1180 aufwies, an beiden Enden durch zwei Metallscheiben mit einem geeigneten Durchmesser luftdicht verschlossen. Um die Luftdichtigkeit zu erreichen, wurden - wie es gängige Praxis bei solchen Aufblastests ist - Spanngurte und handelsübliches Gewebeklebeband verwendet. Durch ein Ventil in einem der beiden Metallscheiben wurde Druckluft in die Schlauchfolie geleitet, bis diese platzte. Vor dem Platzen waren Schichtabrisse von innenliegenden Folienschichten erkennbar, die als "Spleiß" (Engl.: splice) bezeichnet werden. Hieraus bildete sich eine nur lokal auftretende Blase in der Mehrschichtfolie, welche dann bei weiterem Aufblasen zu einem Folienriss und einem Platzen der Schlauchfolie führte. Die maximale Dehnung (Angabe in Prozent) wurde ermittelt, indem der bis zum Platzen erzielte Außenumfang der Schlauchfolie an ihrer größten Stelle gemessen und mit dem anfänglichen Schlauchdurchmesser verglichen wurde, wobei folgende Formel verwendet wurde:

$$\text{Maximale Dehnbarkeit} = [(\text{Schlauchdurchmesser nach Aufblasen} \, / \, \text{anfänglicher Schlauchdurchmesser vor dem Aufblasen}) - 1] \cdot 100$$

Eine vergleichbare Formel gilt für den "Folienspleiß", d.h. dem ersten bemerkbaren Abriss einer Schicht der Schlauchfolie (ohne dass der gesamte Schlauch davon betroffen ist):

„Spleiß" = [(Schlauchdurchmesser nach Aufblasen und erstem erkennbaren Schichtabriss / anfänglicher Schlauchdurchmesser vor dem Aufblasen)

– 1] · 100

Für die weiteren Prüfungen wurden die Folien 24 Stunden im Normklima gelagert.

Als Prüfgerät für die Gleitreibung wurde ein BETEX Slipping Tester RK2 verwendet mit einer Kraftmessdose von 10 N. Es kam ein LINSEIS L120 E Schreiber zum Einsatz. Zwei Folienstücke wurden mit einem Gewicht (1,96 N) belastet, übereinander gezogen und die dazu notwendige Kraft gemessen.

Die nachfolgenden Beispiele und Vergleichsbeispiele dienen der Erläuterung der Erfindung, sind jedoch nicht einschränkend auszulegen.

### II. Verwendete Materialien

TEGO® Photoinitiator A 18 ist ein für die Aushärtung der TEGO® RC Silikone durch UV-Strahlen besonders geeigneter Photoinitiator (1.5-2 % Einsatzkonzentration).

TEGO® RC 702 ist ein lösungsmittelfreies, UV-vernetzendes Silikonacrylat zur Herstellung von Trennbeschichtungen mit niedrigen Trennkraftwerten. TEGO® RC 711 ist ein lösungsmittelfreies Silikonacrylat zur Trennbeschichtung von Papier und Kunststofffolien. Es dient als Haftvermittler sowie als Komponente zur Erhöhung des Trennkraftwertes zusammen mit anderen TEGO® RC Silikonen. TEGO® RC 711 ist ein CR-Additiv (CR = Controlled Release) und Haftvermittler und besitzt eine lineare Struktur mit mehr als 10 und weniger als 20 Si-Einheiten. Die RC-Zahl beträgt 0,62, die Dichte 1 g/cm$^3$ und die Viskosität (25°C) 400-700 mPas.

TEGO® RC 902 ist ein lösemittelfreies Silikonacrylat zur Trennbeschichtung von Papier und Kunststofffolien, mit dem niedrige Trennkraftwerte erzielbar sind. TEGO® RC 902 ist ein Basispolymer mit zuerst einem Spacer (≥ 3 C-Atome), dann der Acrylat-Gruppe. Es besitzt eine lineare, bifunktionelle Struktur (α,ω), wobei die RC-Zahl 0,91, die Dichte 1 g/cm$^3$ und die Viskosität (25°C) 200-600 mPas beträgt.

Die oben genannten TEGO-Produkte stammen alle von der Firma Evonik Industries AG.

Zur Erläuterung sei angemerkt, dass der RC-Wert den Polysiloxan-Anteil angibt, während die übrigen Bestandteile aus der Organik, d.h. den AcrylatGruppen, besteht. Beispielsweise bedeutet der RC-Wert von 0,91 von TEGO® RC 902, dass es 9 % Organik und 91 % Polysiloxan enthält.

Bei den im Folgenden vorgestellten Beispielen B1-B3 sowie dem Vergleichsbeispiel wurde als Polyamid-Schicht stets eine Mischung aus 12 % Durethan B40 FAM (Lanxess), das ein PA 6 ist, und 88 % Durethan C38 F (Lanxess), das ein Copolyamid mittlerer Viskosität ist, verwendet. Als Polyamide (PA) sind prinzipiell handelsübliche Polyamide einsetzbar, z.B. (jeweilige Markennamen in Klammern) der Firmen Lanxess (Durethan, s.o.), BASF (Ultramid), DuPont (Zytel), DSM Engineering Plastics (Akulon, Stanyl), EMS-Chemie (Grilamid, Grivory, Grilon), Evonik (Vestamid, Trogamid), Radici (Radilon, Radiflam, Raditer, Heraform, Heraflex) Rhodia (Technyl,Stabamid), UBE, DSM (Novamid), Atofina (Rilsan).

Ein typischer einsetzbarer Haftvermittler ist beispielsweise Admer NF498E, das ein mit Maleinsäureanhydridgruppen modifiziertes LDPE der Firma Mitsui ist. Admer®-Substanzen sind PE-Copolymere mit MaleinsäureanhydridGruppen (MSA-Gruppen), die eine große Adhäsion zu PET, EVOH und PA besitzen, während sie sehr gut verarbeitbar sind und eine thermische Stabilität aufweisen, die äquivalent zu gewöhnlichem PE ist.

Typische einsetzbare Polyolefine sind beispielsweise Lupolen 2420 F, das ein LDPE der Firma LyondellBasell Polymers ist, und Exceed 1327 CA der Firma ExxonMobil Chemical Company, das ein mittels Metallocen-Katalyse hergestelltes Ethylen-Copolymer ist, bei dessen Polymerisation neben Ethylen Hexen als weiteres Co-Monomer eingesetzt wird.

Eingesetzte Kleber waren TESA 7476, der ein Kautschuk-basierter Kleber ist, und TESA 7475, ein Acrylatbasierter Kleber.

Als migrierende lipophile Verbindung wurde das Wachs (Trennwachs) Constab PE-SA 270 auf Basis Ethylenbis-stearamid (EBS) der Firma CONSTAB Polyolefin Additives GmbH eingesetzt.

### III. Herstellung der silikonisierten Schlauchfolien

Die Folie des Vergleichsbeispiels V1 ist eine 200 μm dicke, als Schlauchinnenfolie bei der grabenlosen Kanalsanierung dienende Schlauchfolie ohne trennende Beschichtung (m.a.W. ohne Release-Ausrüstung) und ohne Wachs-Additivierung:

| Schicht-Nummer | Zusammensetzung | Anteil in Schicht in % | Dicke in $\mu$m |
|---|---|---|---|
| 1 | • Durethan C38 F<br>• Durethan B40 FAM | • 88<br>• 12 | 40 |
| 2 | • Haftvermittler: Admer NF 498 E | • 100 | 10 |
| 3 | • Lupolen 2420 F<br>• Exceed 1327 CA | • 70<br>• 30 | 65 |
| 4 | • Haftvermittler: Admer NF 498 E | • 100 | 10 |
| 5 | • Lupolen 2420 F<br>• Exceed 1327 CA | • 70<br>• 30 | 75 |
| | | | Summe: 200 $\mu$m |

In den Beispielen B1-B3 wurde die Folie aus Vergleichsbeispiel V1 auf der Polyamid-Seite mit folgenden Silikon- bzw. Polysiloxan-Rezepturen beschichtet (ausgerüstet):

- Beispiel B1: Vergleichsbeispiel V1 plus Polysiloxan-Rezeptur 1 gemäß nachfolgender Tabelle (Auftragsgewicht ATG: 1 g/qm), die ein einfaches Ablösen (easy relase) ermöglicht und eine besonders gute Trennwirkung besitzt;

- Beispiel B2: Vergleichsbeispiel V1 plus Polysiloxan-Rezeptur 2 gemäß nachfolgender Tabelle (ATG: 1 g/qm), die ein schwergängiges bzw. kontrolliertes Ablösen (tight bzw. controlled release) ermöglicht und eine mittelmäßige Trennwirkung besitzt;

- Beispiel B3: Vergleichsbeispiel V1 plus Polysiloxan-Rezeptur 3 gemäß nachfolgender Tabelle (ATG: 1 g/qm), die eine mittlere (medium release) Ablösung ermöglicht und eine gute Trennwirkung besitzt.

Hierbei sind die eingesetzten Polysiloxanrezepturen (Beschichtungsmaterialien) und deren Anteile wie folgt:

| Beispiel | Evonik RC Produkte | | | |
|---|---|---|---|---|
| | Angabe der Mengen in Gew.-% | | | |
| | RC902 | RC702 | RC 711 | A 18 |
| B1 | | 100 % | | |
| B2 | | | 98 % | 2 % |
| B3 | 59 % | | 39 % | 2 % |

Die erforderlichen Beschichtungsanlagen sind dem Fachmann bekannt und können zum Beispiel aus einem 5-Walzen-Auftragswerk bestehen. Hersteller geeigneter Anlagen zum Aufbringen einer Silikonbeschichtung sind zum Beispiel Pagendarm, Polytype, Kroenert, Coatema, Bachofen + Meier oder Olympia.

### IV. Herstellung der Wachs-additivierten Schlauchfolien

Beispiel B4: Aufbau Schlauchinnenfolie, Dicke 200 $\mu$m ; mit 1 % Trennwachs Constab PE-SA 270 (migrierendes Additiv) auf Basis Ethylen-bis-stearamid (EBS) in Polyamid-Außenschicht:

| Schicht-Nummer | Zusammensetzung | Anteil in Schicht in % | Dicke in $\mu$m |
|---|---|---|---|
| 1 | • Durethan C38 F<br>• Durethan B40 FAM<br>• Constab PE-SA 270 | • 87,5<br>• 11,5<br>• 1,0 | 40 |
| 2 | • Haftvermittler: Admer NF 498 E | • 100 | 10 |
| 3 | • Lupolen 2420 F | • 70 | 65 |

(fortgesetzt)

| Schicht-Nummer | Zusammensetzung | Anteil in Schicht in % | Dicke in $\mu$m |
|---|---|---|---|
|  | • Exceed 1327 CA | • 30 |  |
| 4 | • Haftvermittler: Admer NF 498 E | • 100 | 10 |
| 5 | • Lupolen 2420 F<br>• Exceed 1327 CA | • 70<br>• 30 | 75 |
|  |  |  | Summe: 200 $\mu$m |

Beispiel B5: Aufbau Schlauchinnenfolie, Dicke 200 $\mu$m; mit 4 % Trennwachs Constab PE-SA 270 auf Basis Ethylen-bis-stearamid (EBS) in Polyamid-Außenschicht:

| Schicht-Nummer | Zusammensetzung | Anteil in Schicht in % | Dicke in $\mu$m |
|---|---|---|---|
| 1 | • Durethan C38 F<br>• Durethan B40 FAM<br>• Constab PE-SA 270 | • 85,5<br>• 9,5<br>• 4,0 | 40 |
| 2 | • Haftvermittler: Admer NF 498 E | • 100 | 10 |
| 3 | • Lupolen 2420 F<br>• Exceed 1327 CA | • 70<br>• 30 | 65 |
| 4 | • Haftvermittler: Admer NF 498 E | • 100 | 10 |
| 5 | • Lupolen 2420 F<br>• Exceed 1327 CA | • 70<br>• 30 | 75 |
|  |  |  | Summe: 200 $\mu$m |

Beispiel B6: Aufbau Schlauchinnenfolie, Dicke 200 $\mu$m; mit 6 % Trennwachs Constab PE-SA 270 auf Basis Ethylen-bis-stearamid (EBS) in Polyamid-Außenschicht:

| Schicht-Nummer | Zusammensetzung | Anteil in Schicht in % | Dicke in $\mu$m |
|---|---|---|---|
| 1 | • Durethan C38 F<br>• Durethan B40 FAM<br>• Constab PE-SA 270 | • 85,0<br>• 9,0<br>• 6,0 | 40 |
| 2 | • Haftvermittler: Admer NF 498 E | • 100 | 10 |
| 3 | • Lupolen 2420 F<br>• Exceed 1327 CA | • 70<br>• 30 | 65 |
| 4 | • Haftvermittler: Admer NF 498 E | • 100 | 10 |
| 5 | • Lupolen 2420 F<br>• Exceed 1327 CA | • 70<br>• 30 | 75 |
|  |  |  | Summe: 200 $\mu$m |

## V. Messergebnisse

1) Bestimmung der Trennkraft/Haftung

Für alle Trennfolien der Beispiele B1-B6 sowie des Vergleichsbeispiels V1 wurde jeweils nach der vorstehend beschriebenen Methode die Trennkraft ermittelt, die zum Entfernen der Trennfolie von einem Testklebeband erforderlich ist. Es ergaben sich folgende Ergebnisse:

| Beispiel | Trennkraft in cN/25 mm (Vorderseite/Rückseite Schlauch) | | | |
| --- | --- | --- | --- | --- |
| | Kleber TESA 7476 (simuliert Harzklebrigkeit) | | Kleber TESA 7475 | |
| | 1d, 40°C | 7d, 40°C | 1d, 40°C | 7d, 40°C |
| V1 | verblockt | verblockt | 798/772 | 796/745 |
| Folien mit Polysiloxan-Beschichtung (Silikon) | | | | |
| B1 | 55/45 | 52/49 | 8/8 | 9/9 |
| B2 | 402/391 | 415/398 | 130/128 | 112/123 |
| B3 | 60/44 | 76/62 | 9/7 | 12/10 |
| Folien mit Wachsadditivierung | | | | |
| B4 | 753/752 | 734/736 | 623/623 | 615/610 |
| B5 | 420/419 | 415/417 | 297/299 | 290/291 |
| B6 | 405/404 | 401/405 | 278/279 | 275/275 |

Anmerkung: Bei den Schlauchfolien aus den Beispielen B1-B6 sind die Vorderseite und die Rückseite (bzw. die Ober- und die Unterseite) des flachgelegten Schlauchs jeweils identisch, was die Beschichtung oder die Belegung mit migrierenden Additiven anbelangt. Die die Beschichtung aufweisende Seite ist bei dem Schlauch immer nach außen gerichtet. Die gemessenen Werte für die Vorderseite der Außenseite des Schlauchs und die Rückseite der Außenseite des Schlauchs sind im Rahmen der Messgenauigkeit identisch.

Die Klebrigkeit der beim Schlauchlining üblicherweise verwendeten Harze entspricht im Wesentlichen der Klebrigkeit des TESA 7476 (Kautschuk-basierter Kleber) und kann damit sehr gut abgeschätzt werden.

Wie aus der Tabelle ersichtlich, zeigen die Polysiloxan-Rezepturen der Beispiele B1 und B3 nahezu ähnliche Trennkraft-Werte, wobei die "easy release" Polysiloxan-Rezeptur aus Beispiel B1 etwas geringere Werte aufweist als die "medium release" Rezeptur aus Beispiel B3. Deutlich höhere Trennkräfte werden allerdings - bei beiden getesteten Klebern - bei der "tight release" Polysiloxan-Rezeptur aus Beispiel B2 gefunden.

Mit der Auswahl von entsprechenden Rezepturen für die Polysiloxan-Beschichtung ist bezüglich des den Harzeigenschaften ähnlichen Klebers TESA 7476 ein Trennkraft-Bereich im Bereich von ca. 20 cN/25 mm bis ca. 550 cN/25 mm möglich. Somit kann das Trennverhalten der Schlauchinnenfolie, d.h. deren Außenseite, vom Harz nach dessen Aushärtung in einem sehr breiten Bereich eingestellt werden und reicht von besonders "leicht zu trennen" über "mittelmäßig zu trennen" bis "schwierig zu trennen". Auch bei der Anwendung der erfindungsgemäßen Schlauchfolien als Gleitfolien oder Preliner-Folien wirkt sich die Verringerung der Trennkräfte sehr günstig für die Anwendung aus, da damit auch eine Verringerung der Reibwerte (COF, Coefficient Of Friction) einhergeht und die Anhaftung von Harz vermieden wird (s. Genaueres hierzu weiter unten).

Eine Verringerung der Trennkräfte wird auch bei den erfindungsgemäßen Schlauchfolien B4-B6 festgestellt. Im Vergleich zur Folie aus Vergleichsbeispiel V1 wird dadurch das Verblocken (d.h. ein unerwünschtes starkes Aneinanderhaften und eine nicht mehr mögliche Trennung) der Folie mit dem Kautschuk-basierten Kleber TESA 7476 vermieden und es werden mit 753 cN/25 mm, 420 cN/25 mm und 405 cN/25 mm (Werte nach einem Tag (1 d) bei 40°C Lagerung) messbare und deutlich geringere Trennkräfte erreicht. Der gleiche Trend wird mit dem Acrylat-basierten Kleber TESA 7475 erzielt. Im Vergleich zur Folie aus Vergleichsbeispiel V1 wird dadurch der anfängliche Wert von 798 cN/25 mm auf 623 cN/25 mm verringert, wenn 1 % PE-SA 270 in die Polyamid-Schicht gegeben wird (Beispiel B4). Mit 4 % PE-SA-270 in der Polyamid-Schicht wurde als Trennkraft 297 cN/25 mm ermittelt (Beispiel B5); die weitere Erhöhung der Konzentration auf 6 % PE-SA 270 führte zu einer Trennkraft von 278 cN/25 mm (Beispiel B6).

Aus den Messergebnissen zu den Trennkräften ist ferner ersichtlich, dass es offenbar eine Sättigungskonzentration für das migrierende Additiv gibt. Bei beiden Klebern ergab sich eine deutliche Abnahme der Trennkraft, wenn sukzessive bis zu 4 Gew.-% Wachs in die Außenschicht eingetragen wurden (Beispiele B4 und B5). Die weitere Erhöhung des Wachsanteils auf 6 % führt indes nur noch zu einer prozentual eher geringeren Abnahme der Trennkraftwerte (Beispiel B6 im Vergleich mit den Beispielen B4 und B5 sowie dem Vergleichsbeispiel V1).

Der Effekt der Migration zur Oberfläche wird - erwartungsgemäß - durch Lagerung der Folie bei 40°C begünstigt. So sind bei beiden Klebern die Trennkräfte nach 7 Tagen (7d) stets etwas geringer als nach 1 Tag (1d), gezählt von der Herstellung der Folien.

Die Additivierung mit Wachs (Trennwachs) erreicht bei beiden Klebern zwar nicht ganz das geringe Trennkraftniveau einer Beschichtung der Folie mit Polysiloxan (B1-B3), aber es wird dennoch eine merkliche Abnahme der Trennkraft und der Reibwerte erzielt. Damit wird das Trennkraft-Niveau, welches bei Verwendung von Beschichtungen mit Polysiloxanen im Bereich ca. 20 bis 550 cN/25 mm eingestellt werden kann, bis hoch auf ca. 800 cN/25 mm erweitert, d.h. bis zum Beginn der Verblockung der Folie gegen den Kleber oder das Harz, was einen noch breiteren Einsatzbereich der erfindungsgemäßen Folien insbesondere im Rahmen der Herstellung von Schlauchlinern bzw. im Rahmen des Schlauchlining-Verfahrens bei der grabenlosen Kanalsanierung erlaubt.

## 2. Ermittlung der Haftung

Ferner wurde nach der oben beschriebenen Methode die Haftung der Beschichtung auf der betreffenden Außenschicht der Schlauchfolien B1-B3 geprüft:

| Beispiel | Haftung der Beschichtung auf der Außenschicht |
|----------|-----------------------------------------------|
| V1 | (nicht vorhanden, i.O.) |
| B1 | Prüfung i.O. |
| B2 | Prüfung i.O. |
| B3 | Prüfung i.O. |
| B4 | (nicht vorhanden, i.O.) |
| B5 | (nicht vorhanden, i.O.) |
| B6 | (nicht vorhanden, i.O.) |

Prüfung i.O. = Prüfung in Ordnung (kein Rub-Off Effekt)

Die Tabelle zeigt, dass die Polysiloxan-Beschichtung aus den Beispielen B1-B3 fest mit der Folie verankert ist und sich nicht abreiben lässt. Dies ist bei einem Einsatz der erfindungsgemäßen Schlauchfolie als Schlauchinnenfolie bei der grabenlosen Kanalsanierung besonders wichtig, da bei ungenügender Anbindung restliches Polysiloxan in das Harz des Schlauchliners migrieren könnte und dadurch dessen Aushärtung negativ beeinflussen könnte.

Da die Folien aus dem Vergleichsbeispiel V1 sowie aus den Beispielen B4-B6 keine Beschichtung auf Basis Polysiloxan aufweisen, kann dort kein Rub-Off auftreten.

Somit wird die Aushärtung des Harzes weder durch die Beschichtung der Schlauchfolie mit Polysiloxan beeinträchtigt, noch durch die Zugabe von an die Oberfläche des Schlauchs migrierenden Bestandteilen, welche die Oberfläche mit einer dünnen Schicht belegen.

## 3. Ermittlung der Reibungswerte

Die folgenden Reibungswerte (COF) wurden bei den Schlauchfolien des Vergleichsbeispiels V1 und der Beispiele B1-B6 gemessen, wobei Außenseite gegen Außenseite zweier Folien gemessen wurde:

Vergleichsbeispiel V1: Mittelwert 0,31; PA-Seite gegen PA-Seite;
Beispiel B1: Mittelwert 0,25; Polysiloxan-beschichtete Seiten gegeneinander;
Beispiel B2: Mittelwert 0,27; Polysiloxan-beschichtete Seiten gegeneinander;
Beispiel B3: Mittelwert 0,245; Polysiloxan-beschichtete Seiten gegeneinander;
Beispiel B4: Mittelwert 0,24; Wachs-additivierte Seiten gegeneinander;
Beispiel B5: Mittelwert 0,16; Wachs-additivierte Seiten gegeneinander;
Beispiel B6: Mittelwert 0,14; Wachs-additivierte Seiten gegeneinander.

Aus diesen Ergebnissen ist unmittelbar ersichtlich, dass sowohl eine Beschichtung mit Polysiloxan (sog. Silikonisierung) als auch eine Additivierung mit an die Oberfläche migrierenden Substanzen den Reibungskoeffizienten COF reduzieren. Insbesondere bei der grabenlosen Kanalsanierung sind niedrige Reibungskoeffizienten immer vorteilhaft, da die Schlauchliner dann leichter in das Rohr einziehbar sind.

## 4. Aufblastest, Spleißen und Bruch

| Beispiel | Ausgangs umfang in mm | Spleiß in mm | Spleiß in % | Bruch in mm | Bruch in % |
|---|---|---|---|---|---|
| V1 | 1054 | 1222 | 15,9 | 1902 | 80,5 |
| B1 | 1044 | 1220 | 17,9 | 2050 | 96,4 |
| B2 | 1042 | 1280 | 22,8 | 2170 | 108,3 |
| B3 | 1050 | 1250 | 19,0 | 2100 | 100,0 |
| B4 | 1050 | 1229 | 17,0 | 1985 | 89,0 |
| B5 | 1052 | 1245 | 18,3 | 2016 | 91,6 |
| B6 | 1050 | 1243 | 18,4 | 2025 | 92,9 |

Überraschenderweise wird gefunden, dass sich die Dehnung bis zum Spleiß durch Beschichtung mit Polysiloxan und Wachsadditivierung gegenüber der (nicht silikonisierten und nicht mit Wachs additivierten) Referenz aus dem Vergleichsbeispiel V1 deutlich erhöht. Bei der mit Polysiloxan beschichteten Schlauchfolie aus Beispiel B3 beträgt die Zunahme der Dehnung bis zum Spleiß gegenüber der Referenz aus Vergleichsbeispiel V1 3,1 %, bei Beispiel B2 sogar fast 7 %.

Eine weitere deutliche Verbesserung ergibt sich auch bei der Dehnung bis zum Bruch. Während das Vergleichsbeispiel V1 schon bei einer Dehnung von 80,5 % reißt, ergibt sich bei der mit Polysiloxan beschichteten Schlauchfolie aus Beispiel B1 eine Dehnung von 96,4 % (15,9 % mehr gegenüber V1), bei der mit Polysiloxan beschichteten Schlauchfolie aus Beispiel B3 eine Dehnung von 100,0 % (19,5 % mehr gegenüber Referenz V1). Am Deutlichsten tritt die Verbesserung der Dehnung bis zum Bruch bei der mit Polysiloxan beschichteten Schlauchfolie aus Beispiel B2 hervor. Hier ist die Dehnung bis zum Bruch mit 108,3 % sogar 27,8 % größer gegenüber der Referenz V1.

Auch die Additivierung mit Wachs bewirkt eine merkliche Erhöhung der Dehnbarkeiten der Schlauchfolie bis zum Folienspleiß und zum Folienbruch, wie der Vergleich der Beispiele B4-B6 mit der nicht additivierten Folie aus Vergleichsbeispiel V1 zeigt. Die Zugabe von 6 % Wachs (Beispiel B6) erhöht die Dehnbarkeit bis zum Folienspleiß immerhin um bis zu 2,5 % gegenüber der Folie aus dem Vergleichsbeispiel V1. Die Dehnbarkeit bis zum Bruch der Folie verbessert sich bei der Folie aus Beispiel B6 um über 12 % gegenüber der Folie aus dem Vergleichsbeispiel V1 (bei Beispiel 4: 8,5 %, bei Beispiel 5 11,1 %).

Damit wird die Dehnbarkeit bis zum Spleiß bzw. bis zum Bruch durch Silikonisierung an den beiden Außenseiten einer (flachgelegten) Schlauchfolie besonders erhöht. Auch die Additivierung mit Wachs führt zu merklichen Verbesserungen.

Als Ursache für diesen überraschenden, positiven Effekt hinsichtlich der mechanischen Eigenschaften der erfindungsgemäßen Schlauchfolie kann eine zusätzliche Schutzwirkung der außenliegenden Polyamid-Schicht durch sowohl einen dünnen Polysiloxan-Film (durch Beschichtung) als auch durch einen dünnen Wachsfilm (durch Migration an die Oberfläche) vermutet werden. Die beiden Varianten - Beschichtung mit einem Polysiloxan ("Silikonisierung") und Wachsadditivierung - führen zu einer hydrophoben, wasserabweisenden Schutzschicht an der Außenseite der Schlauchfolie.

Die Erfindung wurde anhand von einigen Ausführungsbeispielen erläutert, ohne dass die Erfindung auf diese beschränkt wäre. Abwandlungen der Erfindung im Rahmen der Ansprüche sind ohne Weiteres möglich.

**Patentansprüche**

1. Einlegeschlauch (1) für die grabenlose Kanalsanierung, umfassend eine außenliegende Schlauchfolie (5), die vorzugsweise flüssigkeitsdicht ist sowie zumindest teilweise UV-Strahlung und/oder kurzwelliges sichtbares Licht reflektiert und/oder absorbiert sowie blickdicht oder zumindest kontakttransparent ist, sowie eine innenliegende Schlauchfolie (2) mit einer oder mehreren Schichten sowie einem zwischen diesen beiden Schlauchfolien (5, 2) angeordnetem Trägermaterial, das mit einem reaktiven Kunststoffharz getränkt ist,
wobei die dem Trägermaterial zugewandte Außenseite der innenliegenden Schlauchfolie (2) zumindest bereichsweise eine Beschichtung (3) mit mindestens einem Polysiloxan und/oder mit mindestens einer migrierenden Verbindung aufweist und/oder
eine Belegung mit mindestens einer migrierenden Verbindung aufweist, die in eine Außenschicht der innenliegenden Schlauchfolie (2) eingebracht ist und zeitabhängig an die Oberfläche dieser Außenschicht migriert.

2. Einlegeschlauch nach Anspruch 1, **dadurch gekennzeichnet, dass** die besagte Beschichtung (3) nur auf einem Teil der betreffenden Umfangsfläche der besagten Außenseite vorgesehen ist, beispielsweise in Form von kontinuierlichen oder unterbrochenen Streifen oder kontinuierlich die längs der innenliegenden Schlauchfolie (2) verlaufenden Legekanten überdeckend.

3. Einlegeschlauch nach Anspruch 1 oder 2, **dadurch gekennzeichnet, dass** die innenliegende Schlauchfolie (2) eine nach innen weisende Außenschicht sowie eine nach außen weisende Außenschicht und vorzugsweise mindestens eine innenliegende Schicht als Haftvermittlerschicht aufweist, wobei die nach außen weisende Außenschicht die besagte Beschichtung (3) und/oder Belegung aufweist.

4. Einlegeschlauch nach Anspruch 3, **dadurch gekennzeichnet, dass**

   - die eine Außenschicht mindestens ein Homo- und/oder Copolyamid und die andere Außenschicht mindestens ein thermoplastisches Olefin-Homo- oder Copolymer enthält, vorzugsweise jeweils mit einem prozentualen Gewichtsanteil von mehr als 25 Gew.-%, oder
   - beide Außenschichten mindestens ein thermoplastisches Olefin-Homo- oder Copolymer enthalten, und dass eine ein Homo- und/oder Copolyamid enthaltende innenliegende Schicht vorhanden ist, vorzugsweise jeweils mit einem prozentualen Gewichtsanteil von mehr als 25 Gew.-%.

5. Einlegeschlauch nach einem oder mehreren der vorherigen Ansprüche, **dadurch gekennzeichnet, dass** die innenliegende Schlauchfolie (2) zusätzlich mindestens eine innenliegende Schicht aufweist, welche wie folgt ausgebildet ist:

   - mindestens als eine EVOH-Schicht; und/oder
   - mindestens ein Barrierematerial enthaltend, beispielsweise als Barriere gegen Sauerstoff, Wasserdampf und/oder Öl; und/oder
   - mindestens ein thermoplastisches Homo- und/oder Copolymer enthaltend, welches vorzugsweise ein Polyethylen-Homopolymer (PE), besonders bevorzugt ein LDPE oder HDPE oder ein Polypropylen-Homopolymer (PP).

6. Einlegeschlauch nach einem oder mehreren der vorherigen Ansprüche, **dadurch gekennzeichnet, dass** das mindestens eine Polysiloxan auf wenigstens einem ausgehärteten, d.h. vernetzten, Polysiloxan basiert, welches ausgewählt ist aus der Gruppe umfassend additionsvernetzte, vorzugsweise metallkatalysiert additionsvernetzte, kondensationsvernetzte, radikalisch vernetzte, kationisch vernetzte und durch Feuchtigkeitseinwirkung vernetzte Polysiloxane.

7. Einlegeschlauch nach einem oder mehreren der vorhergehenden Ansprüche, **dadurch gekennzeichnet, dass** das mindestens eine Polysiloxan mit nicht Silicium-haltigen Monomeren copolymerisiert ist.

8. Einlegeschlauch nach einem oder mehreren der vorherigen Ansprüche, **dadurch gekennzeichnet, dass** die mindestens eine migrierende Verbindung lipophil ist, insbesondere ein Wachs, ein Paraffin, eine Fettsäure oder ein Fett, oder dass die mindestens eine migrierende Verbindung hydrophil ist, insbesondere ein Polyether, Polyester, ein Alkohol mit mindestens einer Hydroxyl-Gruppe, Ethylenglykol, Polyethylenglykol, Polypropylenglykol, Propandiol, Butandiol, Pentandiol, Hexandiol oder Glycerin.

9. Einlegeschlauch nach Anspruch 8, **dadurch gekennzeichnet, dass** die mindestens eine migrierende lipophile oder hydrophile Verbindung einer ein thermoplastisches Olefin-Homo- oder Copolymer oder einer ein Homo- und/oder Copolyamid enthaltenden Außenschicht der innenliegenden Schlauchfolie (2) zugesetzt ist.

10. Einlegeschlauch nach Anspruch 8 oder 9, **dadurch gekennzeichnet, dass** die mindestens eine migrierende lipophile oder hydrophile Verbindung mit einem Anteil von mindestens 0,1 Gew.-%, vorzugsweise von mindestens 0,5 Gew.-%, besonders bevorzugt von mindestens 1 Gew.-% der entsprechenden Schicht der innenliegenden Schlauchfolie (2) zugesetzt ist.

11. Einlegeschlauch nach einem oder mehreren der vorherigen Ansprüche, **dadurch gekennzeichnet, dass** die mindestens eine migrierende Verbindung:

   - eine kurzkettige Verbindung bzw. ein Oligomer mit 1 bis 50 Kohlenstoffatomen ist;
   - eine anorganische Verbindung (mit 1 bis 500 Silicium-Atomen) oder ein (Schicht)Silikat ist; oder

- ein kürzerkettiges Polymer mit 50 bis 20.000 Kohlenstoffatomen ist.

**12.** Einlegeschlauch nach einem oder mehreren der vorherigen Ansprüche, **dadurch gekennzeichnet, dass** die innenliegende Schlauchfolie (2) mindestens eine Schicht aufweist, die mindestens ein thermoplastisches Elastomer (TPE), vorzugsweise zu mehr als 20 Gew.-%, vorzugsweise mehr als 40 Gew.-% und bis zu 100 Gew.-%, enthält.

**13.** Einlegeschlauch nach einem oder mehreren der vorherigen Ansprüche, **dadurch gekennzeichnet, dass** die Gesamtdicke der innenliegenden Schlauchfolie (2) zwischen 10 $\mu$m und 5000 $\mu$m, vorzugsweise zwischen 20 $\mu$m und 1000 $\mu$m, besonders bevorzugt zwischen 30 $\mu$m und 500 $\mu$m, beträgt.

**14.** Einlegeschlauch nach einem oder mehreren der vorherigen Ansprüche, **dadurch gekennzeichnet, dass** die Filmdicke der besagten Beschichtung (3) höchstens 15 $\mu$m, vorzugsweise höchstens 5 $\mu$m, besonders bevorzugt zwischen 0,1 $\mu$m und 3 $\mu$m, beträgt, und dass die Filmdicke der besagten Belegung höchstens 15 $\mu$m, vorzugsweise höchstens 5 $\mu$m, besonders bevorzugt zwischen 5 nm und 3 $\mu$m, beträgt.

**15.** Verwendung eines Einlegeschlauchs (1) nach einem der vorhergehenden Ansprüche zur Sanierung eines unterirdisch verlegten Rohres (K), vorzugsweise einem Kanalrohr, wobei die innenliegende Schlauchfolie (2) von der besagten Trägermaterialschicht (4) nach Austrocknen des Kunstharzes abziehbar ist.

**16.** Verwendung einer Schlauchfolie als die besagte innenliegende Schlauchfolie (2) eines Einlegeschlauchs (1) nach einem der Ansprüche 1 bis 14, wobei die dem Trägermaterial zugewandte Außenseite der innenliegenden Schlauchfolie (2) zumindest bereichsweise eine Beschichtung (3) mit mindestens einem Polysiloxan und/oder mit mindestens einer migrierenden Verbindung aufweist und/oder eine Belegung mit mindestens einer migrierenden Verbindung aufweist, die in eine Außenschicht der innenliegenden Schlauchfolie (2) eingebracht ist und zeitabhängig an die Oberfläche dieser Außenschicht migriert.

**Claims**

**1.** Insertion tube (1) for trenchless sewage pipe renovation, comprising an external tubular film (5) that is preferably impermeable to liquids and reflects and/or absorbs, at least partially, UV radiation and/or visible light of short wavelengths and is opaque or at least contact transparent, as well as an inner tubular film (2) comprising one or more layers and a carrier material impregnated with a reactive plastic resin arranged between the two tubular films (5, 2), wherein the external side of the inner tubular film (2) that faces the carrier material has at least regionally a coating (3) with at least one polysiloxane and/or with at least one migrating compound, and / or a covering with at least one migrating compound, that is integrated into an external layer of the inner tubular film (2) and migrates depending on time to the surface of the external layer.

**2.** Insertion tube according to claim 1, **characterized in that** said coating (3) is present only on a part of the circumferential surface in question of the aforesaid external side, for example in form of continuous or interrupted stripes or continuously covering the laying edges running along the inner tubular film (2).

**3.** Insertion tube according to claim 1 or 2, **characterized in that** the inner tubular film (2) features an external layer facing inwards and an external layer facing outwards and preferably at least one internal layer as adhesion promoter layer, wherein the external layer facing outwards comprises the coating (3) and / or covering.

**4.** Insertion tube according to claim 3, **characterized in that**

- the one external layer contains at least one homo- and/or co-polyamide and the other external layer contains at least one thermoplastic olefin homo- or copolymer, in each case preferably with a proportion by weight expressed in percent of more than 25% by weight, or
- both external layers contain at least one thermoplastic olefin homo- or copolymer, and there is one internal layer containing a homo and/or copolyamide, in each case preferably with a proportion by weight expressed in percent of more than 25% by weight.

**5.** Insertion tube according to one or more of the preceding claims, **characterized in that** the inner tubular film (2) features additionally at least one internal layer that is formed as follows:

- at least as one EVOH layer; and/or
- containing at least one barrier material, for example as a barrier against oxygen, water vapor and/or oil; and/or
- containing at least one thermoplastic homo- and/or copolymer, preferably a polyethylene homopolymer (PE), very preferably an LDPE or HDPE or a polypropylene homopolymer (PP).

6. Insertion tube according to one or several of the preceding claims, **characterized in that** the at least one polysiloxane is based on at least one cured, i.e. cross-linked, polysiloxane, selected from the group comprising addition cross-linked, preferably metal-catalyzed addition cross-linked, condensation cross-linked, radical cross-linked, cation cross-linked and humidity cross-linked polysiloxanes.

7. Insertion tube according to one or several of the preceding claims, **characterized in that** the at least one polysiloxane is copolymerized with monomers that do not contain silicon.

8. Insertion tube according to one or several of the preceding claims, **characterized in that** the at least one migrating compound is lipophilic, especially a wax, a paraffin, a fatty acid or a fat, or that the least one migrating compound is hydrophilic, especially a polyether, polyester, an alcohol with at least one hydroxyl group, ethylene glycol, polyethylene glycol, polypropylene glycol, propanediol, butanediol, pentanediol, hexanediol or glycerin.

9. Insertion tube according to claim 8, **characterized in that** the at least one migrating lipophilic or hydrophilic compound is added to an external layer of the inner tubular film (2) containing a thermoplastic olefin homo- or copolymer or a homo- and/or copolyamide.

10. Insertion tube according to claims 8 or 9, **characterized in that** the at least one migrating lipophilic or hydrophilic compound with a proportion of at least 0.1 % by weight, preferably of at least 0.5% by weight, very preferably of at least 1 % by weight, has been added to the corresponding layer of the inner tubular film (2).

11. Insertion tube according to one or several of the preceding claims, **characterized in that** the at least one migrating compound:

  - is a short-chain compound or an oligomer with 1 to 50 carbon atoms;
  - is an inorganic compound (with 1 to 500 silicon atoms) or a (sheet) silicate; or
  - is a shorter-chained polymer with 50 to 20.000 carbon atoms.

12. Insertion tube according to one or several of the preceding claims, **characterized in that** the inner tubular film (2) comprises at least one layer containing a thermoplastic elastomer (TPE), preferably containing more than 20% by weight, preferably more than 40% by weight and up to 100% by weight.

13. Insertion tube according to one or several of the preceding claims, **characterized in that** the total thickness of the inner tubular film (2) is between 10 $\mu$m and 5000 $\mu$m , preferably between 20 $\mu$m and 1000 $\mu$m, and very preferably between 30 $\mu$m and 500 $\mu$m.

14. Insertion tube according to one or several of the preceding claims, **characterized in that** the film thickness of said coating (3) is no more than 15 $\mu$m, preferably no more than 5 $\mu$m, especially preferably between 0.1 $\mu$m and 3 $\mu$m, and that the film thickness of said covering is no more than 15 $\mu$m, preferably no more than 5 $\mu$m, especially preferably between 5 nm and 3 $\mu$m.

15. Use of an insertion tube (1) according to one of the previous claims for renovating a pipe (K) laid underground, preferably a sewage pipe, wherein the inner tubular film (2) can be removed from said carrier material layer (4) after the plastic resin has dried.

16. Use of a tubular film as the said inner tubular film (2) of an insertion tube (1) according to one of the claims 1 to 14, wherein the external side of the inner tubular film (2) that faces the carrier material has at least regionally a coating (3) with at least one polysiloxane and/or with at least one migrating compound and/or a covering with at least one migrating compound that is integrated into an external layer of the inner tubular film (2) and migrates depending on time to the surface of the external layer.

**Revendications**

1. Tuyau de chemisage (1) pour la réhabilitation sans tranchée de canalisations, comprenant une feuille tubulaire extérieure (5), de préférence étanche aux liquides, qui réfléchit et/ou absorbe au moins partiellement le rayonnement UV et/ou la lumière visible à ondes courtes et qui est opaque ou au moins transparente par contact, ainsi qu'une feuille tubulaire intérieure (2) avec une ou plusieurs couches ainsi qu'un matériau support disposé entre ces deux feuilles tubulaires (5, 2), qui est imprégné d'une résine synthétique réactive,
   dans lequel la face extérieure de la feuille tubulaire intérieure (2) tournée vers le matériau de support présente, au moins en certaines zones, un revêtement (3) avec au moins un polysiloxane et/ou avec au moins un composé migrant, et/ou
   un enduisage avec au moins un composé migrant qui est incorporé dans une couche extérieure de la feuille tubulaire intérieure (2) et migre vers la surface de ladite couche extérieure en fonction du temps.

2. Tuyau de chemisage selon la revendication 1, **caractérisé en ce que** ledit revêtement (3) est prévu seulement sur une partie de la surface circonférentielle respective de ladite face extérieure, par exemple sous la forme de bandes continues ou interrompues ou recouvrant de manière continue les bords de pose s'étendant le long de la feuille tubulaire intérieure (2).

3. Tuyau de chemisage selon la revendication 1 ou 2, **caractérisé en ce que** la feuille intérieure tubulaire (2) présente une couche extérieure orientée vers l'intérieur ainsi qu'une couche extérieure orientée vers l'extérieur et de préférence au moins une couche intérieure en tant que couche de promoteur d'adhérence, sachant que la couche extérieure orientée vers l'extérieur présente ledit revêtement (3) et/ou enduisage.

4. Tuyau de chemisage selon la revendication 3, **caractérisé en ce que**

   - l'une des couches extérieures contient au moins un homopolyamide et/ou copolyamide et l'autre couche extérieure contient au moins un homopolymère ou copolymère d'oléfine thermoplastique, de préférence dans chaque cas avec une part de poids de plus de 25 % en poids, ou
   - les deux couches extérieures contiennent au moins un homopolymère ou copolymère d'oléfine thermoplastique, et **en ce qu'**une couche intérieure contenant un homopolyamide et/ou copolyamide est présente, de préférence dans chaque cas avec une part de poids exprimée en pour cent de plus de 25 % en poids.

5. Tuyau de chemisage selon l'une quelconque ou plusieurs des revendications précédentes, **caractérisé en ce que** la feuille tubulaire intérieure (2) présente en outre au moins une couche intérieure qui se présente sous une forme comme suit :

   - au moins en tant qu'une couche EVOH ; et/ou
   - contenant au moins un matériau barrière, par exemple en tant que barrière contre l'oxygène, la vapeur d'eau et/ou l'huile; et/ou
   - contenant au moins un homopolymère et/ou copolymère thermoplastique, qui est de préférence un homopolymère de polyéthylène (PE), de manière particulièrement préférée un PEBD ou PEHD ou un homopolymère de polypropylène (PP).

6. Tuyau de chemisage selon l'une quelconque ou plusieurs des revendications précédentes, **caractérisé en ce que** le, au moins un, polysiloxane est à base d'au moins un polysiloxane durci, c'est-à-dire réticulé, qui est sélectionné dans le groupe comprenant les polysiloxanes réticulés par addition, de préférence réticulés par addition sous catalyse par métal, réticulés par condensation, réticulés par voie radicalaire, réticulés par voie cationique et réticulés par l'effet de l'humidité.

7. Tuyau de chemisage selon l'une quelconque ou plusieurs des revendications précédentes, **caractérisé en ce que** le, au moins un, polysiloxane est copolymérisé avec des monomères ne contenant pas de silicium.

8. Tuyau de chemisage selon l'une quelconque ou plusieurs des revendications précédentes, **caractérisé en ce que** le, au moins un, composé migrant est lipophile, en particulier une cire, une paraffine, un acide gras ou une graisse, ou que le, au moins un, composé migrant est hydrophile, en particulier un polyéther, un polyester, un alcool avec au moins un groupe hydroxyle, l'éthylène glycol, le polyéthylène glycol, le polypropylène glycol, le propanédiol, le butanédiol, le pentanédiol, l'hexanédiol ou le glycérol.

**9.** Tuyau de chemisage selon la revendication 8, **caractérisé en ce que** le, au moins un, composé lipophile ou hydrophile migrant est ajouté à une couche extérieure de la feuille tubulaire intérieure (2) contenant un homopolymère ou copolymère d'oléfine thermoplastique ou une couche extérieure contenant un homopolyamide et/ou copolyamide.

**10.** Tuyau de chemisage selon une des revendications 8 ou 9, **caractérisé en ce que** le, au moins un, composé lipophile ou hydrophile migrant est ajouté dans la couche afférente de la feuille tubulaire intérieure (2) en une proportion d'au moins 0,1 % en poids, de préférence d'au moins 0,5 % en poids, de manière particulièrement préférée d'au moins 1 % en poids.

**11.** Tuyau de chemisage selon l'une quelconque ou plusieurs des revendications précédentes, **caractérisé en ce que** le, au moins un, composé migrant :

   - est un composé à chaîne courte ou un oligomère contenant 1 à 50 atomes de carbone ;
   - est un composé inorganique (contenant 1 à 500 atomes de silicium) ou un silicate (en couches) ; ou
   - est un polymère à chaîne plus courte contenant 50 à 20 000 atomes de carbone.

**12.** Tuyau de chemisage selon l'une quelconque ou plusieurs des revendications précédentes, **caractérisé en ce que** la feuille tubulaire intérieure (2) présente au moins une couche contenant au moins un élastomère thermoplastique (TPE), de préférence à plus de 20 % en poids, de préférence à plus de 40 % en poids et jusqu'à 100 % en poids.

**13.** Tuyau de chemisage selon l'une quelconque ou plusieurs des revendications précédentes, **caractérisé en ce que** l'épaisseur totale de la feuille tubulaire intérieure (2) est comprise entre 10 $\mu$m et 5 000 $\mu$m, de préférence entre 20 $\mu$m et 1 000 $\mu$m, de manière particulièrement préférée entre 30 $\mu$m et 500 $\mu$m.

**14.** Tuyau de chemisage selon l'une quelconque ou plusieurs des revendications précédentes, **caractérisé en ce que** l'épaisseur de feuille dudit revêtement (3) est au maximum de 15 $\mu$m, de préférence au maximum de 5 $\mu$m, de manière particulièrement préférée entre 0,1 $\mu$m et 3 $\mu$m, et que l'épaisseur de feuille dudit enduisage est au maximum de 15 $\mu$m, de préférence au maximum de 5 $\mu$m, de manière particulièrement préférée entre 5 nm et 3 $\mu$m.

**15.** Utilisation d'un tuyau de chemisage (1) selon l'une quelconque des revendications précédentes pour la réhabilitation d'un conduit (K) posé sous terre, de préférence un conduit de canalisation, dans laquelle la feuille tubulaire intérieure (2) peut être extraite de ladite couche de matériau support (4) après le séchage de la résine synthétique.

**16.** Utilisation d'une feuille tubulaire comme de la feuille tubulaire intérieure (2) d'un tuyau de chemisage (1) selon l'une quelconque des revendications 1 à 14, dans laquelle la face extérieure de la feuille tubulaire intérieure (2) tournée vers le matériau de support présente, au moins en certaines zones, un revêtement (3) avec au moins un polysiloxane et/ou avec au moins un composé migrant, et/ou un enduisage avec au moins un composé migrant qui est incorporé dans une couche extérieure de la feuille tubulaire intérieure (2) et migre vers la surface de ladite couche extérieure en fonction du temps.

Fig. 1

Fig. 2

Fig. 3

EP 2 777 925 B1

Fig. 4

Fig. 5

EP 2 777 925 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5906789 A
- WO 2007054350 A1
- EP 1155256 B1
- WO 2010075946 A1
- DE 102010023764 A1